(19) Europäisches Patentamt
European Patent Office
Office européen des brevets

(11) **EP 2 280 493 B1**

(12) **EUROPÄISCHE PATENTSCHRIFT**

(45) Veröffentlichungstag und Bekanntmachung des Hinweises auf die Patenterteilung:
**20.02.2013 Patentblatt 2013/08**

(51) Int Cl.:
*H04B 3/56* *(2006.01)*  *H04B 3/54* *(2006.01)*
*H02J 9/06* *(2006.01)*

(21) Anmeldenummer: **10166123.9**

(22) Anmeldetag: **16.06.2010**

(54) **Sicherheitsbezogenes Kommunikationsverfahren auf Energieversorgungsleitungen und ein dazugehöriges Netz**

Security related communication process on power supply lines and an appropriate network

Procédé de communication relatif à la sécurité sur des lignes d'alimentation en énergie et réseau correspondant

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **18.06.2009 AT 9452009**

(43) Veröffentlichungstag der Anmeldung:
**02.02.2011 Patentblatt 2011/05**

(73) Patentinhaber: **RP-Technik e. K.**
**63110 Rodgau (DE)**

(72) Erfinder:
• **Ranostaj, Frank**
**60437 Frankfurt am Main (DE)**
• **Pasedag, Reinald**
**63110 Rodgau (DE)**

(74) Vertreter: **Cremer & Cremer**
**Patentanwälte**
**St.-Barbara-Straße 16**
**89077 Ulm (DE)**

(56) Entgegenhaltungen:
**WO-A2-94/24777**

**Beschreibung**

Die vorliegende Erfindung betrifft ein Verfahren zu einer versorgungsleitungsgeführten Kommunikation für eine zentral versorgte Sicherheitsbeleuchtungsanlage. Weiterhin betrifft die vorliegende Erfindung ein endseitiges Versorgungsnetz einer zentralisierten Sicherheitsstromversorgung, das auf ein erfindungsgemäßes Verfahren zurückgreifen kann. Versorgungsstromnetze sind in der Regel weit verzweigte Netze mit einer Vielzahl von Energiequellen, die insbesondere Wechselspannungsversorgungen für Endverbrauchernetze zur Verfügung stellen. Trotz hoher Netzsicherheit gibt es immer wieder Zustände, bei denen im Endverbrauchernetz nicht die ausreichende Energie aus der Netzwechselspannung geliefert werden kann. In der Regel ist die Netzwechselspannung eine Sinuswechselspannung bzw. eine Wechselspannung, die sinusförmig, harmonisch und monofrequent ist. Um die Energieversorgung im endseitigen Verbrauchernetz sicherzustellen, sind zahlreiche Rückfalllösungen bekannt, die mit Gleichspannungen, sowohl gepulsten als auch Dauergleichspannungen bzw. Strichgleichspannungen, im Falle eines Netzausfalles oder einer Netzenergieversorgungsreduzierung unterstützend eingreifen.

Insbesondere bei Beleuchtungsanlagen in öffentlich zugänglichen Gebäuden ist es wichtig, dass im Notfall oder bei Ausfall, Störung bzw. Reduzierung der zentralen oder lokalen Versorgungsenergie eine ausreichende Notsicht- bzw. Notlichtbeleuchtung zur sicheren Evakuierung einzelner Gebäudebereiche, Gebäudeabschnitte oder sogar des gesamten Gebäudes vorgehalten wird. Hierzu ist es weithin bekannt, besondere Beleuchtungsmittel bzw. Beleuchtungskörper vorzuhalten, die im Falle eines detektierten besonderen Betriebszustandes verlässlich und gezielt bewusst eingeschaltet werden können. So ist das selektive Ein- und Ausschalten von Beleuchtungsnetzen ohne Nutzung weiterer Steuerleitungen, d. h. also über die Versorgungsleitungen, nach einem Rundsteuerverfahren aus dem Buch "Betriebsgeräte und Schaltungen für elektrische Lampen" der Autoren Sturm und Klein, ISBN 3-8009-1586-3 bekannt. Das Buch lehrt unter anderem, wie Vorschaltgeräte für besondere Beleuchtungskörper prinzipiell zu gestalten sind, wobei die Vorschaltgeräte mit Rundsteuerempfängern ausgestattet werden können. Um die Erfindung in Bezug auf das Kommunikationsverfahren komprimierter darstellen zu können, wird der Offenbarungsgehalt des Buches in Bezug auf geeignete Schaltungsvarianten von Vorschaltgeräten durch ihre Referenz vollinhaltlich als Offenbarungsumfang der vorliegenden Erfindung inkorporiert.

Das Buch differenziert nicht ausdrücklich zwischen der Gebäudeinstallationstechnik und einer Straßeninstallationstechnik. In größeren Gebäuden, vielleicht sogar mit Außenanlagen, werden häufig nicht nur ein Zentralverteiler, sondern wenigstens ein Hauptverteiler und mehrere Unterverteiler aufgebaut, wobei zum Beispiel einzelne Unterverteiler für die abschnittsweise Beleuchtungstechnik in einem Bauwerk oder einer Gebäudegruppe zuständig sind. Einer (oder mehrere) der Unterverteiler ist (sind) ggf. mit einer Konstantenergie- bzw. Gleichspannungsquelle, wie zum Beispiel einer Gleichspannungsquelle mit Akkumulatoren oder auch einer Brennstoffzellenquelle schaltungstechnisch ausgestattet, um bei einem Versorgungsausfall des Unterverteilers auf die Konstantenergiequelle zurückgreifen zu können. Die Konstantenergiequellen können wahlweise als Gruppenbatterieanlagen oder Zentralbatterieanlagen aufgebaut sein. Durch eine selbstständig funktionierende Steuerungseinheit, die Teil einer Gebäudeleittechnik sein kann, insbesondere Teil einer Sicherheitsstromversorgung mit oder ohne Leistungsbegrenzung bzw. Zentral- oder Gruppenbatterieanlage, lässt sich die Energiequelle des Unterverteilernetzes oder sogar eines Hauptverteilernetzes wechselweise zwischen der zentralen Wechselspannungsversorgung aus dem Versorgungsstromnetz und einer Rückfallenergieversorgung hin- und herschalten. Alternativen bestehen in der Verwendung von Ersatzstrom-, Schnell- und Sofortbereitschaftsaggregaten sowie besonders gesicherten Netzen. Um unter anderem die Gefahr von Kurzschlüssen im Brandfall durch Reduktion der Leiteranzahl zu verringern, ist es üblich, Beleuchtungskörper nicht mit zusätzlichen Steuerungsleitungen auszustatten, sondern die als Endstromkreise arbeitenden Lampen, Leuchtstoffröhren und sonstige Licht ausstrahlenden Verbraucher mit Schaltungen anzusteuern, so dass aufgrund zum Beispiel der Versorgungsspannung ein selbsttätiges Ein- und Ausschalten der Beleuchtungskörper ermöglicht wird.

Sehr detaillierte Ausführungen lassen sich in der DIN VDE 0108, insbesondere Teil 1, von 1989 finden, die zwischenzeitlich Revisionsbearbeitungen unterzogen worden ist, und in der DIN EN 50171. Die zuvor erörterten Systembeschreibungen und schaltungstechnischen Bezeichnungen lassen sich aus der DIN VDE 0108 in ihren zahlreichen Revisionen und aus der DIN EN 50171 entnehmen, die das normenrechtliche Korsett für sicherheitsrelevante Endstromkreise wie Beleuchtungskörper bildet. Der Inhalt der Normen wird zur Bestimmung der Begrifflichkeiten und der geforderten Ablaufdiagramme vollinhaltlich durch ihre Referenzierung in den Offenbarungsumfang der vorliegenden Erfindung inkorporiert. Auf die Begrifflichkeiten aus den einschlägigen Normenwerken wird hingewiesen. Insbesondere Bereitschaftslichtleuchten und Dauerlichtleuchten, die gemischt in einem Endstromkreis eines Gebäudes zusammengefasst sind, müssen normenkonform ansteuer- und betreibbar sein. Hierzu wird ein Sender- und Empfängersystem genommen, das leitungsgebunden anhand der Versorgungsleitungen die endseitigen Verbraucher ein- und ausschalten kann bzw. womit die endseitigen Verbraucher ggf. Informationen an zentrale Steuereinrichtungen zurückschicken können. Im einfachsten Falle ist es ausreichend, dass die Beleuchtungskörper steuerbar sind, ohne dass die Beleuchtungskörper Informationen zurücksenden. In einphasigen Gebäudeinstallationen sind somit wenigstens drei Leitungen vorgesehen, nämlich eine Leitung, über die in der Regel eine Wechselspanrtungsphase übertragen wird, eine Leitung, die als Nullleiter dient, und eine Leitung, die als Schutzleiter dient. Bei einem Betriebszustandswechsel, zum Beispiel in einem Notfall, stellen die gleichen Leitungen die Verbindung zwischen Sender und Empfänger bereit, jedoch werden wenigstens in einem dritten Betriebszustand zwei der drei Leitungen mit einer Gleichspannung beaufschlagt, so dass in diesem Betriebszustand die Bezeichnungen der Leitungen, obwohl sie die gleichen Leitungen bleiben, anzupassen wären. Um nicht permanent zwischen den Bezeichnungen für ein und die gleiche Leitung wechseln zu müssen, wird im Folgenden zur Förderung des leichteren Verständnisses der Erfindung von Phasenleiter, Nullleiter und Erdleiter bzw. geerdetem Leiter gesprochen, auch wenn in dem gerade betrachteten Betriebszustand keine ausschließliche oder reine Wechselspannungsversorgung der Endstromkreise gegeben sein sollte. In einem zweiten Betriebszustand können je nach Schaltungsrealisierung auf den Leitungen eine Wechselspannung, eine gepulste Gleichspannung oder eine Dauergleichspannung bzw. entsprechende Mischformen aufgeprägt worden sein. Im ersten Betriebszustand liegt in dem entsprechenden Unterverteilernetz oder Hauptverteilernetz die Wechselspannung aus dem Versorgungsstromnetz an.

Seit alters her sind Rundsteuerverfahren für die Informationsübertragung über Versorgungsleitungen von Verbrauchern für das Steuern der Verbraucher bekannt. Beispielhaft sei auf den Fachartikel "Die Fernsteuerung ohne Steuerleitungen in Starkstromnetzen, insbesondere die Überlagerung durch mittelfrequente Ströme" von zur Meggede in Die Naturwissenschaften, Seite 662 ff. vom 16.10.1936 und das Fachbuch "AEG-Hilfsbuch", 10. Auflage, insbesondere die Seiten 394 ff. verwiesen. Systeme mit nieder- und mittelfrequenten Trägern erfordern jedoch voluminöse und daraus letztlich resultierend teure Baugruppen - beides steht im Widerspruch zu den Marktanforderungen einer Beleuchtungsanlage.

Basierend auf den langjährigen Erkenntnissen zu den Rundsteuerverfahren gibt es zahlreiche Ansätze, die bekannte Übertragungstechnik allgemeintauglich zu gestalten, damit sie auf Beleuchtungssysteme zu übertragen ist. Bei höherfrequenten Systemen ist eine Übertragung durch Aufbringen einer Signalwechselspannung oder eines Signalwechselstroms auf die Versorgungsspannung in Stromkreisen einer Beleuchtungsanlage jedoch nicht zweckmäßig, weil diese durch Entstör-Eingangskondensatoren normkonformer Leuchtenbetriebsgeräte für die in der Sicherheitsbeleuchtung überwiegend verwendeten LED-Leuchtmittel und Leuchtstofflampen wieder abgeleitet werden und so der Signalausbreitung in ausgedehnten Leitungsanlagen entgegenwirken. Wenige Lösungen sind bekannt, die alle ihre Nachteile haben, beispielhaft sei auf die Veröffentlichungen DE 38 28 271 A1 (Anmelderin: Siemens AG; Anmeldetag: 19.08.1988), US 2006 202 640 A1 (Erfinder: Alexandrov; Anmeldetag: 05.06.2006), US 2006 091 818 A1 (Erfinder: Alexandrov et. al; Anmeldetag: 04.11.2004), US 2003 189 495 A1 (Erfinder: Pettler et. al.; Anmeldetag: 03.04.2002), GB 2 407 013 A (Anmelder Jones et. al.; Anmeldetag: 30.09.2003), US 5 257 006 A (Patentinhaber. Echelon Corporation; Anmeldetag: 21.09.1990), DE 738 528 C (Patentinhaberin: Telefonaktiebolaget L.M.Ericsson; Prioritätstag: 19.04.1940); GB 2 091 976 A (Anmelderin: ECS Energy Conservation Systems Ltd.; Anmeldetag: 12.12.1980), DE 2 333 868 A (Anmelderin: Societa Italiana Telecomunicazioni Siemens S.p.A.; Prioritätstag: 04.07.1972) und DE 28 35 549 A (Anmelder: Rasmussen; Prioritätstag: 15.08.1977) verwiesen. Die Veröffentlichungen gehen zum großen Teil davon aus, dass direkt an der Energieversorgungsquelle, also dem Kraftwerk mit seiner gelieferten Wechselspannung, informationell eingegriffen werden kann. Ob dabei das Schaltsignal tatsächlich an den Verbraucher zuverlässig gelangt, ist von nachgeordneter Bedeutung. Die Systeme erfordern eine vorhandene Spannung, von deren Vorliegen permanent ausgegangen wird.

Die PCT-Patentanmeldung WO 94/024 777 A2 (Anmelder: Stapleton; Prioritätstag: 15.04.1993) beschreibt ein Datenübertragungsverfahren über eine kapazitive Einkopplung auf einen Phasenleiter und einen Nullleiter, wobei das Signal über einen Verstärker getrieben wird. Die Druckschrift führt aus, dass solche Übertragungsverfahren in zahlreichen Anwendungsgebieten eingesetzt werden können, wie z. B. in Pager-Systemen, oder zur Beleuchtungssteuerung. Hierbei wird ein Steuersignal kapazitiv aufgeprägt, während der Erdleiter von den beiden anderen Leitern unabhängig gehalten wird.

Für Gebäudenetze besser angepasst ist die Verbindungseinrichtung, die in der DE 196 01 884 A1 (Anmelderin: Siemens AG; Anmeldetag: 19.01.1996) beschrieben wird. Die Verbindungseinrichtung stellt speziell auf TT- und TN-Netze ab, die bei Gebäudeinstallationen realisiert werden können. Wird ein Grenzwert in Bezug auf eine Potentialdifferenz überschritten, so soll die Überwachungs- und Steuerelektronik der Verbindungseinrichtung allpolig abschalten. Das bedeutet, gerade in dem Zustand, in dem eine sichere Versorgung der Beleuchtungskörper der Notlichtanlage erwünscht ist, schaltet ein Gerät nach DE 196 01 884 A1 ab.

Daher scheint es angebracht zu sein, sich auf die Veröffentlichungen zu konzentrieren, die sich speziell mit Beleuchtungssystemen auseinander setzen. Eine Beschreibung, wie Kommunikationssysteme mit Beleuchtungskörpern aufgebaut werden können, offenbart die US 5 194 858 A (Anmelderin: The Genlyte Group Inc.; Anmeldetag: 29.08.1991). Das System arbeitet mit einer weiteren Leitung, die als Traveler bezeichnet wird. Die Beschreibung rückt in den Vordergrund die Möglichkeit, von der Ferne aus die Leuchten individuell ein- und auszuschalten. Besondere Sicherheitsmaßnahmen, die durch Normen (z. B. die Norm IEC 60364-5-51 (Norm der International Electrotechnical Commission)) für Notlichtbeleuchtungsanlagen bestimmt werden, lassen sich der Beschreibung aber nicht entnehmen. Die Anforderungen aus den einschlägigen Normen sind vielschichtig. So wird u. a. eine Mindestenergieabsicherung nach DIN EN 50171 verlangt.

Besondere Anforderungen an die Zuverlässigkeit und Funktionssicherheit sind zudem bei Notlichtbeleuchtungsanlagen an die energieleitungsgebundene Steuertechnik zu richten. Die Notlichtbeleuchtungsanlagen sollen gerade den Fall abfangen, dass eine Spannungsversorgung unterbrochen ist. Ein Ansatz besteht darin, wie in DE 29 04 875 B2 (Anmelderin: Friemann & Wolf GmbH; Anmeldetag: 09.02.1979), DE 29 33 596 C2 (Patentinhaberin: Friemann & Wolf GmbH; Anmeldetag: 18.08.1979) und DE 29 47 008 A1

(Anmelderin: Friemann & Wolf GmbH; Anmeldetag: 22.11.1979) und DE 103 16 008 A1 (Anmelderin: DB Netz AG; Anmeldetag: 07.04.2003) zu sehen, Einzelleuchtenversorgung durch Energiespeicher vorzusehen.

Zentralisierte Systeme, d. h. mit einer an einem zentralen Punkt anzuordnenden Spannungsversorgung oder an mehreren zentralen Punkten anzuordnenden Gruppenversorgung für den Notfall bzw. den Netzzusammenbruch, die häufig eine Gleichspannungsquelle sind, lassen sich der EP 0 939 476 B2 (Patentinhaberin: Inotec Sicherheitstechnik GmbH; Prioritätstag: 25.02.1998); EP 1 066 690 B1 (Patentinhaberin: CEAG Sicherheitstechnik GmbH; Prioritätstag: 31.03.1998), DE 198 34 304 A1 (Anmelderin: Dr.-Ing. Willing GmbH; Anmeldetag: 30.07.1998) und DE 197 25 710 A1 (Anmelder: Larcher; Prioritätstag: 01.07.1996) entnehmen. Nachteilig an vielen Verfahren ist das Einfügen von Leitungsbauelementen in die Versorgungsleitung, welche bei den typischen Versorgungsleitungen im Kilowattbereich erhebliche elektrische Verluste und eine umständlich zu handhabende Abwärme erzeugen. DE 10 2007 018 884 A1 (Anmeiderin: GfS Gesellschaft für Stromversorgungstechnik mbH; Prioritätstag: 19.04.2006) zeigt eine Alternative, jedoch werden hier die Signale hochfrequent auf die Versorgungsleitungsspannung aufgebracht, welche auf die zuvor diskutierten Probleme stößt. Zudem ist unklar, wie die Bildung von destruktiven Interferenzen des hochfrequenten Signals verhindert wird.

Die EP 2 194 762 A1 (Anmelderin: CEAG Notlichtsysteme GmbH; Anmeldetag: 05.12.2008) konzentriert sich vorrangig auf die Datenaufbereitung innerhalb der Leuchten, die eine Auskunft über die Leuchten, insbesondere am Ende der regulären Leuchtenlebensdauer, geben soll. Wie die Kommunikation auf den Leitungen selber erfolgt, ist in der EP 2 194 762 A1 nicht ausführlicher offenbart, denn die Druckschrift verweist nur auf irgendwelche Datenübertragungseinrichtungen, die die auf den Versorgungsleitungsverbindungen übertragenen und kodierten Daten detektieren und dekodieren können. Eine weitergehende Schaltungsauflösung in prinzipieller Darstellung ist in der EP 0 537 651 A2 (Anmelderin: ABB Patent GmbH; Prioritätstag: 17.10.1991) beschrieben. Der Mikroprozessor wird mit einem Festwertspeicher und einem nichtflüchtigen Speicher mit dem Ziel ausgestattet, spätere "Umprogrammierungen" zu ermöglichen.

Aus der Tatsache, dass die zitierten Druckschriften nahezu sämtlich deutsche bzw. deutschsprachige Anmelderinnen aufweisen, lässt sich die unausgesprochene Annahme mutmaßen, von einer hohen Versorgungsqualität, insbesondere im Bezug auf die Spannungsgüte, aus dem Versorgungsstromnetz ausgehen zu können. Sicherheitsbeleuchtungskörper werden aber in zunehmendem Maße auch in Gebieten eingesetzt, in denen die Energieversorgungsqualität nicht mehr in der gewohnten Art wie in bundesdeutschen bzw. zentraleuropäischen Großstädten vorzufinden ist. Es konnte schon gelegentlich beobachtet werden, dass einige der dargelegten spannungsabhängigen Übertragungsverfahren bei geringerer Versorgungsspannungsqualität oder ungünstiger Verlegung der Versorgungsleitungen Beleuchtungskörper einschalten, die noch gar nicht einzuschalten sind, weil der abzufangende Notfall, z. B. eine zentrale Stromunterbrechung, eigentlich noch nicht eingetreten ist. Auch konnte beobachtet werden, dass gelegentlich die Leuchten gar nicht einschalten, obwohl ein Notfall eingetreten ist. Im Extremfall kann eine Belastung der als Rückfallgleichstromenergiequelle arbeitenden Konstantenergiequelle auftreten, die zu einer Verkürzung der Sicherheitsbeleuchtungszeit für den tatsächlichen Notfall führt.

Die grundlegenden Informationen bezüglich Notlichtbeleuchtungsanlagen, die aus den zuvor zitierten Druckschriften zu entnehmen sind, werden durch ihre Referenzierungen vollinhaltlich in vorliegende Erfindungsbeschreibung aufgenommen, mit der Absicht, die aus den Normen und aus den älteren Patentanmeldungen und Patenten sich ergebenden Darlegungen zu Notlichtbeleuchtungssystemen nicht noch einmal vollumfänglich diskutieren zu müssen, sondern durch die Referenzierungen als Offenbarungsteil in vorliegender Erfindungsbeschreibung ansehen zu können.

Dieses Problem lässt sich auch aus der zuvor diskutierten DE 38 28 272 A1 (Anmelderin: Siemens AG; Anmeldetag: 19.08.1988) entnehmen, nämlich Übertragungsfehler aufgrund von Laufzeiteigenschaften auf den Leitungen. Mit dem Vorschlag der DE 38 28 272 A1, in den Geräten Übertrager einzubauen, wird jedes Gerät entsprechend voluminös und ist ausschließlich für eine Wechselspannungssignalübertragung zwischen Geräten gleicher Hierarchieebene geeignet. Es ist weltweit die Tendenz zu beobachten, dass in Metropolen immer größere Gebäudeeinheiten gebaut werden, sodass die Versorgungsleitungslängen kontinuierlich zunehmen. Vorteilhaft sind der Druckschrift Spulenwicklungsanordnungen mit weiteren Bauteilen, wie zum Beispiel Kondensatoren, zu entnehmen, die bei Gleichspannungsnetzen funktionstüchtig sein sollen. Der Offenbarungsumfang in Bezug auf die Schaltungsvarianten wird vollinhaltlich durch diese Referenz aus Lesbarkeitsgründen in die Beschreibung der vorliegenden Erfindung inkorporiert. Es wird auf die dort offenbarten Schaltungen verwiesen.

Parallel zur Signalkodierung durch die Energieversorgungsübertragung gibt es schon seit Jahren die Entwicklung von sogenannten Powerline-Modulen, für die zum Beispiel typische Halbleiter der ST7537 bzw. der ST7538 sind, deren normungstechnische Grundlagen unter anderem der EN 50065-1 zu entnehmen sind. In den von der Domologic Home Automation GmbH publizierten Fachartikeln in Bezug auf die Powerline-Kommunikation wird ein sich abzeichnendes Problem angesprochen, wonach auf den freigegebenen Frequenzbändern ohne Genehmigung durch eine zentrale Autorisierungsbehörde immer mehr Geräteanbieter, zum Beispiel für Waschmaschinen und Kühlschränke, irgendwelche Informationen auf dem endstromseitigen Versorgungsnetz übertragen und sich somit die Steuerinformationen gegenseitig beeinflussen und stören. Für sicherheitskritische Netze, auf die weitere Verbraucher - ohne Einflussnahme des Notlichtbeleuchtungsmittelherstellers - aufgeschaltet werden, sind unsichere Verbindungen nicht akzeptabel.

Das Buch "Halbleiter-Schaltungstechnik" der Autoren Ulrich Tietze, Christoph Schenk, Eberhard Gamm (Verlag: Springer, Berlin; Auflage: 13., neu bearb. Auflage (15. Oktober 2009), ISBN-10: 3642016219) und das Buch "Digital Communications" der Autoren John Proakis, Masoud Salehi (Verlag: McGraw-Hill Science/Engineering/Math, 5th edition (November 6, 2007), ISBN-10: 0072957166) verdeutlichen die geeigneten schaltungstechnischen Realisierungen, was zusätzlich im Rahmen der elektronischen Umsetzung der nachfolgend dargelegten Erfindung zu beachten ist. Somit darf bei der Darstellung der Erfindung nur noch auf die eigentlichen Kernaspekte eingegangen werden. Auf Grundlage der Darstellung des erfinderischen Prinzips können u. a. mit Hilfe der zuvor genannten Literaturstellen geeignete Schaltungen für den Aufbau eines erfindungsgemäßen Kommunikationssystems realisiert werden.

Es ist also der Bedarf gegeben, bei zusehends komplexeren Energieversorgungsnetzen im Endstrombereich mit einer größeren Anzahl Verteilern ein Kommunikationsverfahren anbieten zu können, das selbst sicherheitskritische Energieverbraucher wie Bereitschaftslichtleuchten betreibbar machen kann. Ein Netz auf Basis des Kommunikationsverfahrens soll eine hohe Zuverlässigkeit aufweisen. Erschwerend kommt hinzu, dass Sender- und Empfangsmodule von einem Hersteller produziert werden, der häufig nicht genau bestimmen kann, was Elektroinstallateure und Verbraucher mit seinen Geräten unternehmen, insbesondere welche Verbraucher angeschlossen werden. Tritt ein Schadensfall ein, vielleicht sogar mit Personenschäden, wird trotzdem versucht, auf den Hersteller einzelner Komponenten für Sicherheitslichtbeleuchtungsanlagen zurückzugreifen, weil Produkthaftungsüberlegungen gerne weithin praktiziert werden.

Die erfindungsgemäße Aufgabe wird durch ein Verfahren nach Anspruch 1 gelöst. Ein erfindungsgemäßes Kommunikationssystem wird in Anspruch 9 vorgestellt. Vorteilhafte Ausgestaltungen lassen sich den abhängigen Ansprüchen entnehmen. Eine vorteilhafte, zentralisiert anzuordnende Versorgungs- und Überwachungseinheit lässt sich dem Anspruch 16 entnehmen. Eine vorteilhafte Gestaltung einer Empfangseinheit, die insbesondere mit einer Notlichtleuchte verbaut werden kann, wird in Anspruch 19 empfohlen.

Die Erfindung betrifft ein leitungsgeführtes Kommunikationsverfahren, das innerhalb eines endseitigen Versorgungsstromnetzes eingesetzt werden kann. Als endseitig werden die Versorgungsstromnetze bezeichnet, die zur Elektrifizierung vorrangig eines abgeschlossenen Gebäudekomplexes mit Verbrauchern ausgestattet sind. Ein endseitiges Versorgungsstromnetz kann natürlich auch Stromgeneratoren für die Notstromversorgung umfassen. Das Kommunikationsverfahren wird im Rahmen einer Haus- und Gebäudeleittechnik verwendet, damit insbesondere sicherheitsbezogene Beleuchtungskörper wie Lampen und Leuchtstoffröhren geschaltet oder gedimmt werden können. Die Sicherheitsbeleuchtungsanlage hat eine Notstromanlage, die zentralisiert die Versorgung der Beleuchtungskörper bei Beeinträchtigung der Netzversorgung über einen ersten Zeitraum garantiert. Hierzu ist die leitungsgeführte Kommunikation mit einem Sender und mit einem Empfänger aufgebaut. In der Regel werden wenigstens mehrere Empfänger verwendet, insbesondere jedem einzelnen Beleuchtungskörper ein eigener Empfänger vorangestellt. Natürlich können auch mehrere Sender in dem endseitigen Versorgungsstromnetz vorhanden sein. Der Sender (bzw. auch die Sender) müssen nicht zwangsweise in einem Unterverteiler angeordnet sein, jedoch ist es vorteilhaft, wenn der Sender auf kurzem Wege in kommunikativer Verbindung mit dem Unterverteiler steht. Der Sender übernimmt die Aufgabe, in Abhängigkeit von Betriebszuständen ein selektives An- und Ausschalten einzelner Beleuchtungskörper, vorzugsweise ohne individuelle Adressierung jedes einzelnen Beleuchtungskörpers, zu veranlassen. Hierzu haben die Beleuchtungskörper keine weiteren Steuerleitungen, sondern das Kommunikationsverfahren greift auf die standardmäßige Elektrizitätsversorgung zurück. Diese Art des Netzaufbaus reduziert die Anzahl der Adern. Kabel gelten im Brandfall als erhöhte Gefahrenquellen. Der Sender überträgt Daten, die wenigstens für einen Endstromkreis bestimmt sind. Das Kommunikationsnetz kennt wenigstens zwei unterschiedliche Betriebszustände, die sich durch die Anzahl der eingeschalteten und ausgeschalteten Beleuchtungskörper bestimmen lässt. Zwischen Sender und Empfänger sind mehrere Energieversorgungsleitungen vorgesehen, von denen wenigstens zwei für die Energieversorgung bestimmt sind und wenigstens ein dritter als Schutzleiter dient. Über standardmäßige Wechselspannungsnetze können variierende Spannungen, wie zum Beispiel sinusförmige Wechselspannungen, aber auch Dauergleichspannungen über wenigstens zwei der drei Leiter geführt sein, damit wenigstens ein Beleuchtungskörper elektrisch unter Rückgriff auf den zweiten, als Rückführungsleiter gedachten Leiter energetisch versorgt ist. Eine auszuführende Befehlsfolge kann darin bestehen, dass der Sender an den Empfänger den Befehl ausgibt, einen Beleuchtungskörper einer bestimmten Kategorie, wie zum Beispiel einer Bereitschaftslichtleuchte oder einer Sicherheitslichtleuchte, an- oder auszuschalten. Zwei der drei Verbindungsleitungen erfahren eine Potenzialverschiebung. Der Schutzleiter, der zum Beispiel geerdet sein kann, wird dabei vorzugsweise während der Befehlsfolge auf einem Konstantpotenzial, insbesondere dem Erdpotenzial, gehalten. Der Verbraucher selber erfährt über seine beiden Energieversorgungsleitungen keine Spannungsveränderung, damit ihm der Start einer Befehlsfolge signalisiert wird. Die Potenzialverschiebung wirkt sich insbesondere gegenüber dem dritten Leiter aus, der vorrangig der Schutzleiter ist. Somit hat die überlagerte Befehlsübertragung über zwei der wenigstens drei vorhandenen Leitungen keinen Einfluss auf die Versorgungsqualität der Versorgungsspannung. Der Isolationswiderstand gegenüber dem Schutzleiter wird in der Regel bei den Schaltkreisen der Endstromkreise so hoch ausgelegt, dass eine im Vergleich zur regulären Wechselspannungsamplitude unbeachtliche Potenzialverschiebung auftritt.

Nach der Norm DIN EN 50065-1 bzw. VDE 0808 Teil 1 darf eine asymmetrische Einspeisung keine Störung auf oder in Fehlerstrom-Schutzschaltern erzeugen. Durch die Potenzialverschiebung bleiben die Fehlerstrom-Schutzschalter störungsfrei, ihre Ansprechschwellen können weiterhin, selbst bei großen Beleuchtungsnetzen, auf einem gleichbleibend niedrigen Niveau, wie zum Beispiel 20 mA, verbleiben. Zudem werden Sicherheitsbeleuchtungsanlagen mit zentralisierter Energieversorgung bzw. vorzugsweise ohne Fehlerstromschutzschalter an den Lastanschlüssen ausgeführt.

Wird die vorliegende Erfindung auf ein mehrphasiges Versorgungsnetz angewendet, so lässt sich die Potenzialverschiebung verschiedenartig realisieren. Es kann eine Potenzialverschiebung zwischen einer Phase und dem Nullleiter genauso wie eine Potenzialverschiebung zwischen allen Phasenleitern und dem Nullleiter als auch eine Potenzialverschiebung zwischen allen Phasenleitern realisiert werden. Welche Art der Potenzialverschiebung anzuwenden ist, hängt unter anderem von der Nutzung und der Verschaltung des Dreiphasen-Systems ab. So kann das Dreiphasen-System als TT-, TI-, TN-Netz usw. realisiert sein.

Nach einem Aspekt der vorliegenden Erfindung wird nicht mehr eine Spannungsüberwachung der Versorgungsleitungen, zum Beispiel mit einem Schwellwertdiskriminator, durchgeführt, sondern es wird eine Abweichung gegenüber dem Schutzleiter detektiert.

Im Falle eines Wechselspannungsversorgungsnetzes lässt sich die eine Energieversorgungsleitung als Phasenleitung bezeichnen, die zweite Energieversorgungsleitung als Nullleiter und der Schutzleiter als Erdleiter oder geerdeter Leiter. Die Potenzialverschiebung erfolgt auf den Energieleitern, d. h., dem Phasenleiter im gleichen Maße wie auf dem Nullleiter. Im gleichen Maße bedeutet, dass der Betrag der Spannungsveränderung auf beiden Leitern bis auf einen Faktor identisch ist. idealerweise erfolgt die Potenzialverschiebung auf beiden Energieleitern gleichzeitig und im gleichen Maße. Die Potenzialverschiebung kann vollkommen symmetrisch sein, so dass im gleichen Maße dahingehend zu verstehen ist, dass eine Spannungserhöhung auf dem Phasenleiter genauso als Spannungserhöhung auf den Nullleiter bemerkbar ist. Somit ist die relative Spannungsdifferenz zwischen Phasenleiter und Nullleiter Null. Bei einem Umschalten, zum Beispiel in einem Unterverteiler, von einer sinusförmigen Wechselspannung auf eine Versorgungsspannung aus einer Sekundärquelle werden die beiden Energieversorgungsleitungen nicht mehr im klassischen Sinne als Phasenleiter und Nullleiter betrachtet. Weil das Kabel selbst aber seine Eigenschaften nicht verändert, sondern nur die aufgeprägte Spannung sich verändert, kann etwas unpräzise auch im Folgenden von Phasenleiter und Nullleiter bei jeder Art von Gleichspannung gesprochen werden.

Die Potenzialverschiebung auf dem Phasenleiter und auch auf dem Nullleiter lässt sich durch eine induktive Spannungsaufprägung realisieren. Je nach Art der Wicklungen der induktiven Kopplung und des Arrangements der Wicklungen bestimmen sich die Zeitgleichheit und die Vorzeichengleichheit der Potenzialverschiebung. Durch eine Überprüfung, wie einer Spannungsmessung, gegenüber dem Erdleiter wird der Übertragungsstart von Schaltinformationen detektiert. Hierbei lässt sich vorteilhaft das Vorzeichen der Spannungs- und/oder der Potenzialänderung gegenüber einem fix zu haltenden Bezugspunkt messen.

Die Informationsübertragung, die nach dem Übertragungsstart sich entfaltet, kann in einer Ausgestaltung paketweise durchgeführt werden. Die Informationsübertragung erfolgt in einem günstigen Fall durch eine periodisch auftretende Potenzialverschiebung. Sowohl der Phasenleiter als auch der Nullleiter erfahren eine periodische Potenzialverschiebung, während der Erdleiter keinerlei Potenzial- oder Spannungsveränderung erfährt. Insbesondere im sicherheitskritischen Bereich von Notbeleuchtungsanlagen ist die zielgerichtete und korrekte Übertragung in einem geforderten Zeitfenster von meist 500 ms an ausgewählte Beleuchtungskörper sicherzustellen. Hierzu ist ein Übertragungsprotokoll zu wählen, das selbstkorrigierend fehlerhafte Beeinflussungen einer Potenzialverschiebung, zum Beispiel durch Streuinduktivitäten, ausblendet. Das Schaltsignal darf im Vergleich zur Übertragungsgeschwindigkeit deutlich langsamer zusammengesetzt werden. Eine einzelne Schaltbefehlsfolge kann mehrere Millisekunden umfassen. Somit hat das erfindungsgemäße Kommunikationsverfahren in Bezug auf seine Schaltgeschwindigkeit ausreichend Zeit, mehrfach, redundant die Schaltinformation im Rahmen der Potenzialverschiebung zu übertragen. Die selbstkorrigierende Prüfsumme setzt sich aus einer möglichen Wiederholung der eigentlichen Schaltinformation zusammen. Alternativ lassen sich natürlich auch andere zyklische Redundanzprüfverfahren oder auch Quersummenverfahren einsetzen.

Die Schaltinformation kann durch eine unter dem Begriff Powerline-Kommunikation bekannte Kommunikation aufgebaut werden, weil für die Powerline-Kommunikation zahlreiche unterschiedliche, fertig integrierte Bausteine standardmäßig angeboten werden. Es ist die Nutzung eines Frequenzbandes, das normungsmäßig für die Datenübertragung freigegeben ist, auszuwählen. Weil zur Zusammenstellung eines Sicherheitsbeleuchtungssystems keine individuellen Abstimmungen mit Energieversorgungsunternehmen durchzuführen sind, ist vorzugsweise ein Frequenzband aus dem Frequenzspektrum von 3 kHz bis 148,5 kHz, vorteilhaft über 30 kHz, insbesondere zwischen 95 kHz und 125 kHz, zu wählen. Läuft das Kommunikationsverfahren in dem besagten Frequenzband ab, so setzt sich der Betreiber der oben dargelegten Gefährdung der Informationsverstopfung nicht aus, obwohl sich jeder Hersteller von Elektrogeräten unautorisierte endstromkreisseitige Kommunikationen zu eigen machen kann, indem das Betreiben der Beleuchtungskörper in Abhängigkeit von Potenzialverschiebungen vollständig abgekoppelt von den übrigen Powerline-Kommunikationsverfahren der üblichen Art und Weise arbeitet. Die Schaltinformationen selber können darüber hinaus noch amplituden-, frequenz- oder phasenmodelliert kodiert sein. Somit liegt eine mehrfach ineinander verschachtelte Kodierung vor. Die Informationsübertragung wird vorrangig durch die Potenzialverschiebung initiiert und dominiert, wobei jedoch weitere Kodierungsverfahren ebenfalls Bestandteil des erfindungsgemäßen Kommunikationsverfahren sein können.

Mit dem erfindungsgemäßen Kommunikationsverfahren können selektiv einzelne Sicherheitsbeleuchtungsmittel, wie zum Beispiel Bereitschaftslichtleuchten oder gefahrensituationsabhängige Richtungsweiser individuell oder in Gruppen, ausgewählt, also selektiv, ein- und ausgeschaltet werden. An einem Phasenleiter, einem Nullleiter und umschlossen von einem Erdleiter lassen sich so Beleuchtungskörper unterschiedlicher Kategorien gleichzeitig aufschalten. Es können Dauerlichtleuchten, Bereitschaftslichtleuchten, geschaltete Bereitschaftslichtleuchten, Alarmleuchten und zusätzliche Warnleuchten an ein und dem gleichen Netz für Sicherheitsbeleuchtungsmittel elektrisch angeschlossen sein und alle Leuchten können zueinander elektrisch parallel verschaltet sein. Der Verdrahtungsaufwand ist reduziert. Es lassen sich trotzdem je nach Betriebszustand Leuchten, die alle zu ein und der gleichen Kategorie gehören, gleichzeitig ein- und ausschalten. Alternativ können auch Leuchten in ihrer Lichtintensität bei besonderen Betriebszuständen zurückgenommen werden. Ist es zum Beispiel bekannt, dass in einer Tiefgarage Leuchten nur einstündig, im Geschäftsbereich dreistündig und in Treppenhäusern achtstündig betrieben werden sollen, so lassen sich die Leuchten nach der vorgesehenen Zeit abschalten oder insbesondere im Treppenhaus mittels Bedarfstaster für eine bestimmte Zeit reaktivieren. Zur Anpassung der Beleuchtungsintensität lassen sich die Dauerlichtleuchten an die Umgebungshelligkeit welche beispielsweise durch separate Sensoren erfasst wird, anpassen und gedimmt betreiben, so dass eine Blendwirkung vermieden wird. Bereitschaftslichtleuchten können in der Helligkeit nach der vorgesehen Versorgungszeit reduziert werden, um mit den Reserven der Batterie eventuellen Rettungskräften möglichst lange ein Begehen des Gebäudes zu erleichtern.

Im Vergleich zum geerdeten Leiter können die Potenzialverschiebungen ihrem Vorzeichen nach bestimmt werden. So lässt sich bei einer Spannungsanhebung sowohl auf dem Phasen leiter als auch auf dem Nullleiter gegenüber dem Erdleiter eine positive Potenzialverschiebung feststellen. Einer Vorzeichen behafteten Potenzialverschiebung kann dementsprechend ein gesetztes oder ein zurückgenommenes Bit zugeordnet werden. Es steht im Belieben des Programmierers der mit Mikrokontrollern betriebenen Sendereinheiten, ob invers, das bedeutet eine positive Potenzialverschiebung entspricht einem rezessiven Bit, oder direkt proportional, das bedeutet eine positive Potenzialverschiebung entspricht einem gesetzten Bit, die Befehlsfolgenübertragung digital kodiert übermittelt wird. Durch eine Begrenzung der Bitmuster wird das Übertragungsband festgelegt.

Die einzelnen Energieversorgungsleitungen können, beispielsweise durch eine Reflexionsunterdrückungsvorrichtung, abgeschlossen sein. Das Abschließen der Versorgungsleitungen kann durch einen Widerstand erfolgen. Durch eine endseitige Reflexionsbedämpfung mittels Widerstand werden Störsignale auf den Leitungen reduziert. Der Widerstand bzw. das Abschlusselement kann vorteilhafter Weise in einem Beleuchtungskörper angeordnet sein. Durch die Bedämpfung wird die rücklaufende Welle auf den zwei Leitungen zur Energieversorgung unterhalb eines Störabstands im Vergleich zur Spannungsänderung reduziert. Die rücklaufende Welle wird so weit reduziert, dass die durch die rücklaufende Welle erzeugte Potenzialänderung auf der Leitung niedriger ist als die durch Potenzialänderung hervorgerufene, mit einem Störabstand ausgestattete Informationsänderung. Das Übertragungsverfahren basiert in vorteilhafter Weiterbildung darauf, dass es Reflexionen auf den Leitungen durch eine Reflexionsunterdrückungsschaltung unterdrückt.

Das erfindungsgemäße Kommunikationssystem setzt sich aus einem oder mehreren Sendern und wenigstens einem, oder auch mehreren, Empfänger(n) zusammen. In der Regel wird das Gebäude aus dem zentralen Energieversorgungsstromnetz eines Energieversorgers elektrisch versorgt. Der Empfänger wird vorzugsweise vor den Endstromkreis einer Sicherheitslichtleuchte vorgeschaltet. In einer Ausgestaltung können Empfänger und Vorschaltgerät zu einem Stück integriert sein. In einem weiteren Ausgestaltungsbeispiel können Empfänger und Vorschaltgerät der Sicherheitslichtleuchte zweiteilig, jeder in einem eigenen Gehäuse, ausgestaltet sein. Zwischen einem Sender und einem Empfänger sind wenigstens drei elektrische Leitungen vorgesehen. Zwei Leitungen dienen als Leiter zur Energieübertragung. Ein Leiter ist ein Schutzleiter, der zum Beispiel einen gewissen Berührungsschutz für die Umwelt darstellen kann. Die Kommunikation zwischen Sender und Empfänger umfasst die Potenzialverschiebung auf zwei der drei zuvor benannten Leitern. Das Kommunikationssystem ist mehrkomponentig aufgebaut. Der Sender kann in einer Überwachungseinheit für einen Unterverteiler integriert sein. Der Sender kann somit als Teil einer Notstromversorgungseinrichtung, die Teil des Unterverteilers sein kann, angeordnet sein. Gleichartig kann anstelle des Unterverteilers auch ein Zentralverteiler für die Anordnung eines Senders, alleinstehend oder integriert in weiteren Bauteilen, gewählt werden.

Im wechselspannungsführenden Betriebszustand ist einer der Leiter der Phasenleiter. Im gleichspannungsführenden Betriebszustand wäre der Phasenleiter eigentlich die positive Versorgungsleitung.

Die Potenzialverschiebung auf zweien der drei Leiter kann synchron und spannungsgleich durchgeführt werden. In diesem Zusammenhang sei angemerkt, dass es hierbei auf die absoluten Spannungswerte nicht ankommt. Wie zuvor angedeutet, kann das Kommunikationssystem eine Konstantenergiequelle, das bedeutet eine Gleichspannungsquelle wie eine Batterieanlage oder eine Brennstoffzellenanlage, umfassen. Bei Wegfall der Wechselspannungsversorgung schreitet die Konstantenergiequelle hilfsweise ein. Der Sender ist idealerweise im Nahbereich, das bedeutet unmittelbar räumlich verwandt, eines Energieverteilers wie Hauptverteiler oder Unterverteiler oder auch Zentralverteiler angeordnet. Der Sender umfasst einen induktiven Übertrager. Der induktive Übertrager stellt die galvanische Entkopplung der für die Steuerungseinspeisung notwendigen Bauteile, insbesondere integrierten Halbleiter, dar. Durch die galvanische Entkopplung findet ein Überspannungsschutz für die spannungsempfindlichen Halbleiter und die Trennung von Energie- und Signalpfad statt. Die Wicklungen sind so ausgeführt, dass die beiden Wicklungen für die Energieübertragungsleitungen gleichsinnig gewickelt sind, während die Wicklungen gewickelt und so induktiv gekoppelt sind. Mit einem einzigen induktiven Bauelement können auf allen Energieleitungen, insbesondere auf bis zu vier Leitungen, die richtigen Potenziale induktiv aufgebracht werden. Die gute galvanische Kopplung wird durch einen oder mehrere Ferritkerne sichergestellt. Der Schutzleiter wird nicht über den Übertrager geführt.

Der Empfänger ist über eine kapazitiv entkoppelte Messimpedanz endstromseitig in dem Versorgungsnetz eingebunden, wobei vorzugsweise der Empfänger die Versorgungsenergie an ein Beleuchtungsmittel durchleitet.

Das erfindungsgemäße Kommunikationssystem steigert die Sicherheit eines mit einer Notlichtbeleuchtungsanlage ausgestatteten Gebäudes. Die Verbraucher können bei einer Störung, wobei unter dem Begriff Störung auch Totalausfälle verstanden werden, der Kommunikation zwischen Sender und Empfänger einen sicheren Zustand einnehmen. Der sichere Zustand zeichnet sich zum Beispiel durch ein Einschalten aller Sicherheitslichtleuchten aus. Zwischen Sender und Empfänger wird hierzu ein Sicherheitssignal übertragen. Das Sicherheitssignal kann in Form eines so genannten periodisch wiederkehrenden charakteristischen Signals, im einfachsten Fall des Trägersignals selbst, von dem Sender auf wenigstens einen Empfänger übertragen werden. Fehlt das erwartete Sicherheitssignal, das auch in der eigentlichen Powerline-Übertragung bestehen kann, so gelangen zum Beispiel der oder die Zustandsfolger in einen Sicherheitszustand und schaltet/schalten die an sie angeschlossenen Sicherheitslichtleuchten ein.

Das Kommunikationssystem hat wenigstens an einer Stelle endstromkreisseitig einen terminierenden Widerstand. Der Widerstand ist vorteilhaft in einem Beleuchtungskörper angeordnet. Ein terminierender Widerstand schließt die Energieübertragungsleitungen ab. Die Terminierung ist angepasst. Es wird eine solche Anpassung vorgenommen, dass eine Wellenreflexion auf den Leitungen vor dem Endstromkreis unter einen Störabstand gedrückt wird.

Die Notstromanlage kann als Überwachungs- und Versorgungseinheit betrachtet werden. Die Überwachungs- und Versorgungseinheit dient für die Energieversorgung einer Sicherheitsbeleuchtungsanlage. In der Sicherheitsbeleuchtungsanlage sind mehrere Leuchten, insbesondere unterschiedlichen Typs, angeordnet. Aus der Notstromanlage heraus kann die Sicherheitsbeleuchtungsanlage und deren Energiezuleitungen überwacht werden. Hierzu hat die Überwachungs- und Versorgungseinheit einen Übertrager mit mindestens zwei isolierten, sich kompensierenden Wicklungen. Der Übertrager und seine Wicklungen sind näher in den zuvor dargelegten Absätzen beschrieben. Mit Hilfe eines 50Hz-Signals des Übertragers können Fehlerströme der Leuchten ausgewertet werden. Zusätzlich oder alternativ können auch Fehler auf den Energiezuleitungen ausgewertet werden.

Die Überwachungs- und Versorgungseinheit schafft somit mit geeigneten Empfängern ein Kommunikationssystem. Die Kommunikation in dem Kommunikationssystem erfolgt nach dem zuvor dargelegten Verfahren.

Als physikalische bzw. elektrotechnische Erklärung lässt sich anführen, dass die Stromkreise, an denen in Sicherheitsbeleuchtungsanlagen Leuchten angeschlossen sind, im Wesentlichen unverzweigt sind. Sie haben häufig Längen von mehreren 100m. Die Leitungen, die zur Bildung dieser Stromkreise beitragen, haben einen induktiven Leitungsbelag und einen kapazitiven Leitungsbelag. Aus den Leitungsbelägen kann eine Wellenimpedanz bestimmt werden, welche bei typischen Leitungen von komplexeren Sicherheitsbeleuchtungsanlagen im Bereich von 20 Ohm bis 200 Ohm liegt. Bei einer höherfrequenten Übertragung auf diesen Stromkreisen kann es insbesondere an den Enden und Verzweigungen der Stromkreise zu Signalreflexionen kommen, die sich destruktiv mit dem Signal überlagern und so die Übertragung der Informationen in bestimmten Abschnitten der Stromkreise verhindern.

Dem kann durch Einkoppeln der Signale über eine Impedanz entgegengewirkt werden. Diese Impedanz liegt im Frequenzband der Übertragung dem Betrag nach möglichst nahe an der Wellenimpedanz der Leitung, wobei auch abweichende Werte bis hin im Milli- oder Kiloohmbereich positive Effekte mit sich bringen. Die Impedanz sollte im Allgemeinen einen möglichst kleinen Imaginäranteil und einen möglichst hohen Realanteil aufweisen. Besonders vorteilhaft ist eine Realisierung, bei der die Impedanz an die installierten Leitungen angepasst werden kann.

Eine besonders einfache Bauform besteht bei Verwendung eines Übertragers zur Signaleinkopplung in einer Anpassung und Nutzung des ohmschen Widerstandes und der Streuinduktivität der Spulen zur Bildung der Ausgangsimpedanz.

Typisch für Stromkreise einer Sicherheitsbeleuchtungsanlage ist es, dass sie, beginnend von der Einspeisestelle, durch mehrere Brandabschnitte führen und die Beleuchtungskörper normenkonform erst im letzten Abschnitt des jeweiligen Stromkreises angeordnet sind. Besitzt zumindest eine Leuchte eine Eingangsimpedanz, die auf den Wellenleitungswiderstand abgestimmt ist, besteht dadurch die Möglichkeit Signal reflexionen weiter zu reduzieren. Die Eingangsimpedanz sollte zumindest bereichsweise in dem zur Übertragung genutzten Frequenzband in der Größenordnung der Wellenimpedanz des Stromkreises oder darüber liegen. Idealerweise bilden die gesamten Impedanzen der Beleuchtungskörper exakt die Wellenimpedanz der Leitung. Dies kann in einer guten Näherung dadurch erreicht werden, dass die Eingangsimpedanzen beispielsweise durch Kodierschalter variiert werden können. Die tatsächlich angeschlossene oder anzuschließende Impedanz wird über einen Kodierschalter eingestellt. So kann die Eingangsimpedanz an die Anzahl der Beleuchtungskörper adaptiert werden.

Aufgrund der in Normen vorgeschriebenen Potenzialtrennung kann es bei einem Umschalten der Quelle der Notstromvorrichtung von Netz- auf Batteriebetrieb zu einer

Potenzialverschiebung auf den Endstromkreisen kommen. Um dieser energiebehafteten Potentialverschiebung standzuhalten, sollten Sende- und Empfangsvorrichtungen, also die Sender und die Empfänger, in Sicherheitsbeleuchtungsanlagen über Schutzmechanismen verfügen. Dies kann durch Überspannungsableitschaltungen beispielsweise mittels Freilaufdioden (insbesondere intrinsisch in Mosfets oder integriert in Operationsverstärkereingängen), Varistoren oder Zenerdioden erfolgen. Senderseitig bieten sich zudem niederohmige Ausgangsstufen (die die Energie in Form eines Stromimpulses absorbieren können) oder spannungsfeste Ausgänge an. Weitere Möglichkeiten bestehen in einer schmalbandigen, frequenzselektiven Ein- und/oder Auskopplung, wodurch deren schnelle Transienten ausgeblendet werden. Alternativ oder ergänzend kann die Potenzialverschiebung der Gleichspannungsquelle durch eine resistive Verschaltung dieser mit Erde, welche die vorgeschriebene Spannungsfestigkeit aufweisen sollte, vermindert werden.

Nach einem weiteren Aspekt zeichnet sich die Erfindung dadurch aus, dass sie vorschlägt, zwischen Netzspannung und Erdleiter eine Y-Kondensatorverschaltung vorzusehen. Eine strikte galvanische Trennung auf der endstromkreisseitigen Gestaltung ist nicht notwendig. Daher sind auch keine Übertrager in den Beleuchtungskörpern mit Empfängern erforderlich. Der eingesparte Platz kann für Schutzschaltungen genutzt werden, die die Empfänger vor Spannungsspitzen beim Umschalten von Wechselspannung auf Gleichspannung schützen. Mit Hilfe der Erfindung ist eine hierarchische Kommunikation zwischen Energieverteiler, Unterverteiler und untergeordneten Beleuchtungskörpern möglich. Der Energieverteiler wird mit einer Energiequelle gestützt.

Nach einem weiteren Aspekt lässt sich das erfindungsgemäße Kommunikationsverfahren für ein Kommunikationssystem dahingehend beschreiben, dass das Kommunikationssystem zum Aufbau einer Notstrombeleuchtungsanlage oder einer Notlichtbeleuchtungsanlage verwendbar ist. Die Notlichtbeleuchtungsanlage umfasst eine erste Energieversorgung zur Einspeisung in einen Energieverteiler und eine weitere Energiequelle als zweite Energieversorgung, ebenfalls zur Einspeisung in den Energieverteiler wie Hauptverteiler oder Unterverteiler. Der Endstromkreis setzt sich unter anderem aus wenigstens einer einschaltbaren Bereitschaftslichtleuchte zusammen. Die Bereitschaftslichtleuchte wird häufig durch ein Vorschaltgerät elektrisch betrieben. Als Teil des Vorschaltgeräts oder als gesondert vorgesetztes Gerät ist ein Zustandsfolger als Empfänger gestaltet. Im Bereich des Energieverteilers ist eine Steuerungseinheit vorgesehen. Die Steuerungseinheit arbeitet mit Daten oder Signalen aus einer Spannungsüberwachungseinheit. Es können auch mehrere Spannungsüberwachungsgeräte in dem Leitungsnetz des Gebäudes vorgesehen sein. In Abhängigkeit eines Signals, das eine Schaltinformation darstellt, wird ein Sicherheitsbeleuchtungsmittel eingeschaltet. Hierzu ist ein Empfänger als Zustandsfolger vorgesehen. Der Zustandsfolger kann einzelne Zustände aufgrund von Schaltinformationen einnehmen. In Abhängigkeit des Zustandes des Zustandfolgers werden einzelne Beleuchtungsmittel ein- und ausgeschaltet. Die Notlichtbeleuchtungsanlage ist als Mischbetriebsanlage gestaltet. Die Notlichtbeleuchtungsanlage umfasst in einer Ausgestaltung Dauerlichtleuchten, Bereitschaftslichtleuchten, ggf. geschaltete Dauerlichtleuchten und geeignete weitere Leuchten, wie zum Beispiel Warnleuchten im Blinkbetrieb. Sicherheitsleuchten werden normkonform in einem vorgegebenen Intervall, bspw. täglich oder wöchentlich, auf ihre Funktiontüchtigkeit hin überwacht. Überwiegend ist eine automatische Durchführung dieser Kontrolle der einzelnen Leuchten gewünscht. Die Rückantwort von den Leuchten soll dabei ebenfalls über die Zuleitungen ohne separates Kabel erfolgen. Die Signalisierung positiver Testergebnisse kann durch eine niederfrequente Impedanzmodulation zwischen den Versorgungsleitungen erfolgen, beispielsweise durch einen kurzzeitig aktivierten Mosfet schaltungstechnisch hinter dem Gleichrichter des Betriebs- oder Steuergerätes der Leuchte. Es werden in dem Fall negative Testergebnisse durch das Ausbleiben der niederfrequenten Impedanzmodulation detektiert. Eine Alternative besteht in der Verwendung des dargelegten senderseitigen Verfahrens. Hierbei wird das Signal unter Beibehalten der kommunikationsleitungszugewandten Seiten oder durch nachfolgend offenbarte Schaltungen eingekoppelt. Der kommunikative Hin- und Rückkanal der Kommunikation kann mittels Zuweisung von Zeitfenstern oder Frequenzfenstern separiert werden.

Eine typische vorteilhafte Ausgestaltung umfasst Batterieanlagen aus Bleiakkumulatoren mit einzelnen Zellen oder Blöcken zu 6V, 12V, 24V oder 36V, welche mit einem temperaturgesteuerten Ladeverfahren und Blockspannungssymmetrieüberwachung ergänzt sind. Die Umschaltung erfolgt über Schütze oder modular mit Relais, teilweise in Kombination mit Leistungshalbleitern, welche außerhalb des Schaltmomentes überbrückt werden können. Häufig wird der Zustand des Systems mittels einer, bei mehrfach installierten Low-Power-Systemen auch übergeordneten, automatischen Prüfeinrichtung (Automated Test System) erfasst und gespeichert sowie via Ethernet, HTML, OLE for Process Control (OPC), auch über modBUS, BACnet, LON oder KNX an eine Gebäudeautomatisierung weitergeleitet - oder von dieser über die genannten Busse/Protokolle gesteuert bzw. programmiert. Weitere Verbindungen bestehen gelegentlich zu einer Brand- oder Rauchmeldeanlage. Eine lokale Steuerung kann auch über DALI erfolgen, insbesondere bei kaskadierten Sendern. Die Empfangsgeräte, die Leuchten oder Leuchtengruppen weisen häufig weitere Steuer- oder Energieeingänge auf, wobei sich die Programmierung des Schaltverhaltens in der genannten Weise oder manuell über Schaltelemente einstellen lässt. Diese Funktionalität lässt sich mit einem Mikrocontroller realisieren, der insbesondere im Falle eines mit dem Leuchtenbetriebsgerät integrierten Empfänger auch Überwachungs- und Steuerungsaufgaben einer einzelnen Leuchte übernehmen kann. Die Funktionsfähigkeit einer Leuchte kann durch eine Strommessung und einen Sollwertvergleich überprüft werden, insbesondere durch eine Mikrocontroller gesteuerte Überwachung. Insbesondere die Zuordnung der Kommunikationsdaten, bspw. anhand einer übertragenen Adresse oder eines Zeitfensters, oder eine Schaltgruppenzugehörigkeit kann gegenüber dem Mikrocontroller durch Kodierschalter oder anhand einer programmierten Seriennummer oder des programmierten Typs erfolgen. Ebenso ist es möglich, einen lokalen Netzausfall der Allgemeinversorgung an die Notstromanlage zu melden. Das Verfahren eignet sich dazu, den Ausfall in einem Unterabschnitt der Notlichtbeleuchtungsanlage zu detektieren. Die Notstromanlage kann über den Netzausfall informiert werden. Das Kommunikationssystem mit Notstromanlage hat eine erhöhte Sicherheit, weil auch der Netzausfall der Allgemeinversorgung an die Notstromanlage gemeldet wird.

Vorteilhafte Ausgestaltungen ergeben sich auch mit Anlagen, die eine Kombination der zuvor dargelegten Merkmale aufweist. So lassen sich Ausführungen wählen, bei denen eine Gruppe von Leuchten (Dauerlichtleuchten, Rettungszeichenleuchten) ungesteuert ist und nur die Fluchtwegs- und ggf. Antipanikbeleuchtung im Bedarfsfall einzeln oder auch gruppen- bzw. bereichsweise zusammen mit der Allgemeinbeleuchtung oder alternativ zur Allgemeinbeleuchtung aktiviert werden.

Eine erfindungsgemäße Notstrombeleuchtungsanlage kann eine Mischbetriebsanlage sein. Mischbetriebsanlagen sind häufig mit Dauerlichtleuchten, Bereitschaftslichtleuchten sowie geschalteten Dauerlichtleuchten ausgestattet. Bei dem Empfang einer validen Schaltinformation schalten die Bereitschaftslichtleuchten, unabhängig von ihrem Ort, also nicht einzeln adressierbar, nach einer recht kurzen Verarbeitungsdauer ein. Eine kurze Verarbeitungsdauer ist kürzer als 500 ms. Insbesondere kann eine Verarbeitungsdauer auch kürzer als 100 ms sein. Bei einer länger andauernden Versorgungsspannungsunterbrechung werden die Empfänger der Schaltinformationen in ihren Ausgangszustand zurückgesetzt. Die Signalaufbereitung und die Signalverarbeitung können in Schaltungsteilen erfolgen, die über Optokoppler galvanisch von den Versorgungsleitungen getrennt sind. Somit greift die Notstrombeleuchtungsanlage auf das zuvor dargestellte leitungsgeführte Steuerungsverfahren zurück.

Der Empfänger, der im Rahmen der Rückmeldung von der Sicherheitsleuchte zu der Überwachungs- und Versorgungseinheit auch Aufgaben eines Senders übernehmen kann, lässt sich vorteilhaft mit einem Mikrokontroller realisieren.

Vorteilhaft ist es, wenn der Beleuchtungskörper unmittelbar für das erfindungsgemäße Kommunikationsverfahren vorbereitet ist. Ein Beleuchtungskörper, der in einer entsprechenden Sicherheitsbeleuchtungsanlage eingesetzt werden kann, sollte eine Hälfte des aus wenigstens zwei Teilen (Sender und Empfänger) bestehenden Kommunikationssystems aufweisen. In der Regel werden in allen Leuchten eines bestimmten Typs, z. B. in allen Bereitschaftsleuchten, gleichartige Empfänger installiert, sodass das Kommunikationssystem mehr als nur zwei Teilnehmer, nämlich so viele Teilnehmer wie zentral angeordnete Notstromanlagen und Beleuchtungskörper eines Typs vorhanden sind, aufweist. Es können mehrere Notstromanlagen vorhanden sein, die Sicherheitsbeleuchtungsanlage ist jedoch mit wenigstens einer zentralisiert angeordneten Notstromanlage ausgestattet. Zum Beispiel im Hauptverteiler der Sicherheitsbeleuchtungsanlage ist die Notstromanlage platziert. Das Kommunikationssystem ist ein beleuchtungskörperübergreifendes Kommunikationssystem. Das bedeutet, das Kommunikationssystem kann eine Kommunikation nicht nur zwischen den Leuchten, sondern auch zu der Notstromanlage bzw. zu einem zentralen Steuergerät aufnehmen. Die Kommunikation erfolgt dabei über die Energieversorgungsleitungen der Sicherheitsbeleuchtungsanlage. Die Sicherheitsbeleuchtungsanlage mit ihren Facetten ist zuvor beschrieben. Der Beleuchtungskörper hat einen Mikrocontroller. Der Mikrocontroller hat mehrere Baugruppen, die in dem Mikrocontroller in einer besonders günstigen Ausgestaltung integriert sind. Der Mikrocontroller verfügt in dieser vorteilhaften Ausgestaltung über einen Mikroprozessor mit einem Rechenwerk und über einen integrierten Datenspeicher. Darüber hinaus sollte der Mikrocontroller einen Analog-Digital-Konverter haben. Aus den übertragenen Daten auf den Versorgungsleitungen kann ein Kommunikationssignal gebildet werden. Hierzu erfasst der Analog-Digital-Konverter das Kommunikationssignal. In dem Mikrocontroller ist eine Adresse hinterlegt. Der Mikrocontroller ist an einer Adresse zu identifizieren. Das heißt, der Mikrocontroller verfügt über eine Adresse, anhand derer der Mikrocontroller durch das Kommunikationssystem adressierbar ist. Weiterhin ist in dem Beleuchtungskörper ein Sender. Der Sender überträgt Informationen über die Energieversorgungsleitungen. Er sendet auf den Energieversorgungsleitungen. Der Mikrocontroller arbeitet mit einer mehrfachen Abtastung. Mittels des Analog-Digital-Konverters wird das Kommunikationssignal mehrfach erfasst. Der Analog-Digital-Konverter tastet das anliegende Signal ab. Zudem ist es vorteilhaft, wenn der Mikrocontroller über eine Multiplikationseinheit verfügt. Das Rechenwerk und der Datenspeicher umfassen eine Wortbreite von mehr als 15 Bit, z. B. 16 Bit oder 32 Bit. Der Mikrocontroller benutzt sein Rechenwerk, um mit dem Rechenwerk eine Dekodierung des mehrfach erfassten Kommunikationssignals durchzuführen. Mit Hilfe des dekodierten Signals wird ein Wert für die Lichtintensität bestimmt. Mit diesem Wert wird die Helligkeit des Beleuchtungsmittels eingestellt. Anhand des mehrfach erfassten Kommunikationssignals steuert das Kommunikationssystem eine Lichtintensität des Beleuchtungskörpers. Weiterhin wird mittels des Senders wenigstens ein Überwachungsergebnis über die Energieversorgungsleitungen übertragen. Zu den Überwachungsergebnissen gehört z. B. die Überwachung, ob das Leuchtmittel des Beleuchtungskörpers einwandfrei funktioniert. Eine Rückmeldung über den Zustand des Beleuchtungsmittels wird versendet. Die mehrfache Erfassung erfolgt mit einer Erfassungsrate, einer Häufigkeit der Erfassung. Die Erfassungsrate übersteigt die Symbolrate des Kommunikationssignals.

Eine Überwachungs- und Versorgungseinheit hat neben der Steuerung der angeschlossenen Beleuchtungskörper, den Sicherheits- bzw. Notleuchten, die Aufgabe, diese und die Leitungsanlage auf Funktionstüchtigkeit zu überwachen. Eine erfindungsgemäße Überwachung wird durch eine kontinuierliche, fortdauernde Messung des Stromwertes oder einer davon abgeleiteten Größe bzw. in einer zeitdiskreten Betrachtung durch eine wiederholte Messung der besagten Größen realisiert. Anhand dieser Größen lässt sich die Zeitableitung bzw. eine Näherung hiervon bilden. Dies kann mittels nachgeschalteten Differenziergliedes oder digital, nach einer Analog-Digital-Konvertierung, in einem Mikrocontroller durch ein entsprechendes digitales Filter erfolgen. Bedeutsame Stromflussänderungen werden anhand eines Vergleichs mit einem Schwellwert und dessen Überschreitung bestimmt. Erfolgt in einem Beleuchtungskörper ein positiver Test der Funktion und wird dieser durch eine Impedanz- und damit Stromflussänderung in den Energieversorgungsleitungen signalisiert, wird diese durch die zuvor beschriebene Schaltung detektiert. Dieses kann zunächst lokal in einem Mikrocontroller gespeichert werden und dann in einer mit den Umschaltvorrichtungen verbundenen, vorzugsweise automatischen, Test- und Prüfeinrichtung signalisiert und protokolliert werden. Zudem ist eine Stromüberwachung eines Endstromkreises eine einfache Methode, um einen Defekt in einem Beleuchtungsmittel zu ermitteln. Hierzu kann auf adaptive Verfahren zurückgegriffen werden, bei denen ein Stromwert nach Inbetriebnahme der Sicherheitsbeleuchtung bestimmt wird, und der im Betriebsverlauf als Vergleichswert unter Berücksichtigung einer Toleranz - um alterungs- und betriebstemperaturbedingte Änderungen auszublenden - zum Testen der ordnungsgemäßen Funktion herangezogen wird. Unterschreitet oder überschreitet der jeweilige Stromwert den Vergleichswert zzgl. des Toleranzwertes, wird dies als Fehler signalisiert. Bei modernen Anlagen mit hocheffizienten LED-Leuchten als Dauerleuchten, häufig ergänzt durch Leuchtstofflampen in Bereitschaftsschaltung, sind diese erforderlichen Toleranzen mitunter zu groß, um einen Defekt einer Leuchte zu erkennen. Weil ein solcher Defekt innerhalb kürzester Zeit entsteht, bewirkt er eine kleine, aber abrupte Veränderung des Stromflusses, eben einen Stromgradienten. Daher ist es vorteilhafter, sich auf den Stromgradienten zu konzentrieren und den Gradienten des Stroms zu detektieren.

Aus zahlreichen Gründen, z. B. in Bezug auf die Kosten für den Aufbau einer entsprechenden Schaltung, z. B. in Bezug auf den Platzbedarf sowie in Bezug auf die angebotene Flexibilität, ist die Dekodierung der Kommunikation mittels eines Mikrocontrollers angeraten. Die Anforderungen an die Hardware lassen sich aus den obigen Darlegungen entnehmen. Insbesondere für die mit einer Demodulation einhergehende Fourier-Transformation und dem hierfür notwendigem Skalarprodukt des Kommunikationssignals mit einem Sinussignal, sind eine Vielzahl von Berechnungen der Form

$$x = \Sigma(k_i \cdot s_i)$$

erforderlich, wobei k Abtastwerte des Kommunikationssignals, jeweils zu dem i-ten Zeitpunkt und s Werte eines Sinussignals zum i-ten Zeitpunkt und i eine in einem bestimmten Bereich fortlaufende Ganzzahl sind.

Um das analoge Kommunikationssignal zu erfassen, ist ein dem Mikrocontroller verbundener Analog-Digital-Konverter nützlich. Dies gilt insbesondere für Sukzessive-Approximation-Wandler, Flash-Wandler und Sigma-Delta-Wandler und Hybride hiervon, wie Pipeline-Wandler, die allesamt einen Signal-Rausch-Abstand von mehr als 40 dB aufweisen. Wie zuvor ausgeführt, können aufgrund der Übertragungseigenschaften der Energieversorgungsleitungen die Pegel am Empfänger variieren. Aufgrund des großen Dynamikbereichs des Analog-Digital-Konverters bleibt das Signal trotzdem mit einem hinreichend großen Signal-Rauschabstand - und damit für Sicherheitszwecke besonders zuverlässig - empfangbar.

Umgekehrt ergibt sich eine besonders günstige Lösung, wenn man nur das Vorzeichen des Signals mittels einem 1-Bit Analog-Digital-Konverter, bspw. realisiert durch einen Komparator oder eines hysterese-behaftetes, digitalisierendes Glied, wie ein Schmitt-Trigger-Glied, auswertet. Den geringen Signal-Rauschabstand dieser Konvertierung kann man durch mehrfach wiederholte Konvertierungen in Verbindung mit redundanter Informationsübertragung in dem Kommunikationssignal kompensieren.

Die Vielzahl der Signalwerte lässt sich in der geforderten kurzen Zeit (eigentlich wirtschaftlich nur) durch spezielle Mikrocontroller bearbeiten. Für einen Empfänger bzw. für ein Modul eines solchen Empfängers, das den Kostenrahmen für Sicherheitsleuchten nicht sprengt, sollten die verwendeten Mikrocontroller integrierte Speicher für das Programm des Mikrocontrollers und für Daten enthalten; die Programmspeicher sind dabei meist in Flash-Technologie - also für einen Datenerhalt auch ohne Versorgungsspannung - ausgeführt, und die Datenspeicher erlauben gleichermaßen lesende wie schreibende Zugriffe.

Bei einer solchen Gestaltung ist hierbei vorteilhaft, dass zumindest auf den Datenspeicher (meistens bezeichnet als Register oder RAM) derart zugegriffen werden kann, dass zumindest 16-Bit, idealer Weise 32-Bit oder mehr mit einem Programmbefehl entnommen und mit einem Programmbefehl verarbeitet werden können. Betrachtet man die o. g. Formel, so erkennt man, dass neben der hinreichenden Datenbreite, um die Summe von vielen Produkten, typischerweise hunderte oder tausende, auch eine effiziente Multiplikation erforderlich ist, um diese Produkte bilden zu können. Ideal hierfür ist eine integrierte Multiplikationseinheit, die weniger Takte als Operandenbits benötigt. In vorteilhafter Weise integriert der Mikrocontroller zudem auch den Analog-Digital-Konverter, wodurch sich eine weitere Kostenersparnis, ebenso bedingt durch die entfallenden - sonst erforderlichen - zusätzlichen Gehäuse und die entfallenden Montage- und Testkosten ergibt. Ebenso kann die Identifikationsnummer, die Adresse, in dem Mikrocontroller, insbesondere während der Programmierung in der Serienfertigung, vergeben werden, oder mittels eines Drehkodierschalters bei der Installation festgelegt werden. Eine weitere Alternative besteht in einer automatischen Vergabe während der Initialisierungsphase des Systems.

Zum Adressieren bestimmter Leuchten enthält das Kommunikationssignal ebenfalls eine Symbolfolge, die der Mikrocontroller mit der Identifikationsnummer bzw. mit der Adresse auf

Identität, auf partielle Gleichheit oder sonst durch geeignete Vergleiche vergleicht und so bestimmt, ob der Beleuchtungskörper oder die Gruppe aus mehreren Beleuchtungskörpern adressiert ist. Das Kommunikationssignal enthält zudem eine Symbolfolge, welche einem Steuerbefehl entspricht.

Der Empfänger kann seriell oder parallel zu der Leuchte geschaltet sein, also betrieben werden. Der Empfänger kann mit einem elektronischen Vorschaltgerät integriert sein. Eine parallele Verschaltung ergibt sich, wenn der Empfänger mit den Versorgungsspannungsanschlüssen parallel zur Elektronik der Leuchte geschaltet ist und die Leuchtensteuerung und -überwachung bspw. über eine DALI-Schnittstelle mit der Leuchtenelektronik realisiert ist. Eine serielle Verschaltung erfolgt, falls die Energieversorgung der Leuchte über das Empfangsmodul erfolgt. Hierbei kann das Modul über einen mit dem Mikrocontroller verbundenen Stromsensor verfügen, um die Stromaufnahme der Leuchte zu messen und gegen einen Fensterwert zu vergleichen. Fällt dieser aus dem Fensterwert heraus, wird das als Störung interpretiert und zurückgemeldet. Ein-, Ausschalten oder Dimmen kann mittels eines Relais bzw. einer Phasenanschnittsteuerung in der Energiezuleitung erfolgen.

Die Rückantwort lässt sich am einfachsten über eine Serienschaltung aus Schaltelement, wie ein Relais, und impedanzbehaftetem Bauelement, wie einem Widerstand, die zwischen dem L-und N-Leiter sitzen, realisieren. Dieser Schaltungsteil kann als weiterer Sender betrachtet werden. Durch den von dem Mikrocontroller gesteuerten Schaltvorgang wird mittels des Schaltelements eine Impedanzmodulation hervorgerufen, welche den Stromfluss in den Endstromkreisen verändert. Diese Änderung wird an einer zentralen Stelle detektiert und dort gespeichert und/oder angezeigt.

Die vorliegende Erfindung zeichnet sich durch zahlreiche, positive Aspekte aus.

So können bspw. unterschiedliche Signallaufzeiten zwischen dem L-Leiter und dem N-Leiter ausgeglichen werden oder unterschiedliche Dämpfungen beider Leiter kompensiert werden - verallgemeinert also unerwünschtes Übertragungsverhalten der Anlage der Versorgungsleitungen kompensiert oder reduziert werden. In dieser Ausgestaltung wird die Information im Wesentlichen durch eine Funktion aus den Potenzialverläufen von L- und N-Leiter gebildet.

Eine Variante der Erfindung besteht zudem darin, typische Störungen des Potenzialverlaufs auf einem oder mehreren Leitern, verursacht durch angeschlossene Verbraucher, durch geeignete Schaltungstopologien zu minimieren. Häufig wird die Störung der Potenzialverläufe gerade durch Netzeingangsfilter von elektronischen Vorschaltgeräten zur Versorgung von LED- oder Leuchtstofflampen hervorgerufen, wenn die elektronischen Vorschaltgeräte mit ähnlichen Frequenzen arbeiten, wie sie das Kommunikationssystem einsetzt: die Netzeingangsfilter versuchen meist Störungen mit diesen Frequenzen niederohmig abzuleiten und unterbinden dabei infolge auch die Kommunikation. Dem kann entgegengewirkt werden, indem zwischen Empfänger und elektronischem Vorschaltgerät ein oder mehrere impedanzbehaftete Bauteile, wie Widerstände, Drosseln, insbesondere stromkompensierte Drosseln, in Reihe geschaltet werden, aber das Kommunikationssignal durch eine Verschaltung der Leiter durch Bauelemente mit hoher Admittanz im Übertragungsfrequenzbereich, wie Kondensatoren, gestärkt wird. Mitunter weisen typische Vorschaltgeräte - meist solche mit Schaltnetzteilen zur LED-Versorgung - unterschiedliche Störamplituden auf L- und N-Leiter auf. Hier kann eine vereinfachte Schaltungsalternative gewählt werden, bei der senderseitig das Signal asymmetrisch bevorzugt auf einen Leiter aufgebracht wird, während empfängerseitig das Bezugspotenzial durch eine Admittanz-Kopplung mit dem PE-Leiter stabilisiert wird.

Besonders vorteilhaft ist in einer solchen Realisierung zudem die zeitliche Berücksichtigung bestimmter Eigenschaften der angeschlossenen Verbraucher (insbesondere bei Beleuchtungskörpern mit LEDs, den LED-Leuchten). Die normativen Anforderungen an Leuchten kleiner Leistung hinsichtlich ihrer Wechselstromoberwellenarmut sind gering. Daraus resultieren meist einfache Schaltungen, bei denen ein Stützkondensator nahezu direkt über eine Grätzbrücke nachgeladen wird; während dieser Zeit ist die Eingangsimpedanz sehr gering und es fließen hohe Ströme, die eine induktive Entkopplung leicht sättigen können und damit wirkungslos machen. In solchen Situation ist es vorteilhaft, die Signalübertragung mit der Netzkurvenform zu synchronisieren und Informationen nur auf der steigenden und fallenden Flanke des Netzsinus zu übertragen, während um den Spitzenwert der Netzspannung diese unverändert bleibt.

Bei einer solchen Lösung werden die energiespeichernden Bauteile für die Signalaufprägung bzw. Signalabnahme häufig bewusst so dimensioniert, dass sie im Scheitelbereich des Sinuskurvenverlaufs schon fast oder tatsächlich in Sättigung gehen. Die Spulen oder Kondensatoren bzw. beide Elemente werden so dimensioniert, dass sie zuverlässig in den steigenden und/oder abfallenden Flanken arbeiten und die Signale aufsynchronisieren können, jedoch im Maximum keine Spannungserhöhung bzw. Potentialverschiebung mehr ausüben. Man kann dieses erfinderische Prinzip noch weiterführen, indem die genutzte Übertragungsfrequenz sender- und empfängerseitig anhand der überlagerten Netzfrequenz aufeinander abgeglichen wird, bspw. mittels einer Phase-Locked-Loop-Schaltung. Alternativ kann auch nur empfängerseitig ein adaptiver, insbesondere digitaler Filter eingesetzt werden, dessen Mittenfrequenz mittels einer Fourier-Transformation des Empfangssignals auf das Maximum der spektralen Energie justiert wird.

Die vorliegende Erfindung kann noch leichter verstanden werden, wenn Bezug auf die beiliegenden Figuren genommen wird, wobei

Figur 1 eine erste Senderschaltung in Prinzipschaltungsdarstellung zeigt,
Figur 2 eine erste Empfängerschaltung in Prinzipschaltungsdarstellung zeigt,
Figur 3 einen zweiten Empfänger in schematischer Prinzipdarstellung zeigt,
Figur 4 einen Schaltungsausschnitt einer zweiten Senderschaltung mit geeignetem Halbleiter darstellt,
Figur 5 einen Schaltungsausschnitt einer dritten Empfängerschaltung mit geeignetem Halbleiter darstellt,
Figur 6 eine Potenzial- und Spannungsverteilung auf Leitungen eines erfindungsgemäßen Kommunikationssystems zeigt,
Figur 7 ein Übertragungsprotokoll darstellt,
Figur 8 eine erfindungsgemäße Gebäudeinstallation zeigt,
Figur 9 mögliche Beleuchtungsmuster erfindungsgemäßer Mischbetriebsanlagen zeigt,
Figur 10 einen Querschnitt durch ein für die Erfindung nutzbares Kabel mit drei Leitern in der Gestaltung als E30-Leitung zeigt und
Figur 11 eine alternative Schaltung der Informationseinprägungsschaltung R4 - L1 der Fig. 1 mit einer weiteren Spule L7 in Serie zwischen R4 und L1 zeigt.

Im Folgenden sind funktionell bzw. namensmäßig ähnliche Komponenten und Bauteile mit den gleichen Bezugzeichen versehen worden, obwohl in einigen Details Unterschiede vorliegen können, um das mögliche, erfindungsgemäße Ausgestaltungsspektrum aufzuzeigen.

Unabhängig von den jeweiligen Ansprüchen offenbaren die Figuren und die Figurenbeschreibungen zusätzliche erfinderische Aspekte, die auch selbständig als schutzwürdig zu betrachten sind.

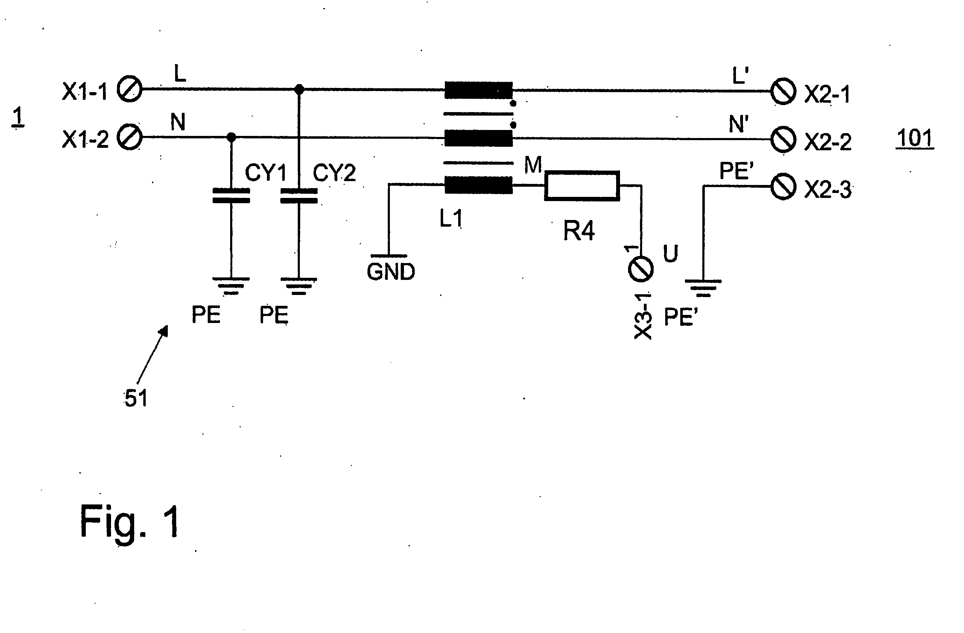

Figur 1 zeigt an Hand einer Schaltungsdarstellung mit elektronischen Symbolen eine besonders einfache Ausführung eines Teils eines Senders 51, der zur Übertragung eines erfindungsgemäßen Kommunikationsverfahrens, insbesondere im Bereich eines Energieverteilers, verwendet werden kann. Mit dem Großbuchstaben X werden einzelne Anschlussstellen, zum Beispiel für Elektrizitätskabel, bezeichnet. Die Schaltung lässt sich auf einer Platine aufbauen, so dass die Platine nach Figur 1 wenigstens drei unterschiedliche Anschlüsse aufweist, nämlich die Anschlüsse X1, die Anschlüsse X2 und den Anschluss X3. An dem Anschluss X1-1 wird eine Versorgungsleitung L für eine erste Leitung zur Energieversorgung angeschlossen. An dem Anschluss X1-2 wird eine zweite Leitung N zur Energieversorgung angeschlossen. Über die Versorgungsleitungen L, N kann die Energieversorgung aus einem Versorgungsstromnetz 1 erfolgen. Gegenüber einem vorzusehenden Erdleiter PE sind Erdleiterkapazitäten CY1, CY2 zwischen der Energieleitung und dem als Schutzleiter dienenden Erdleiter PE in die Schaltung eingebaut. In Anlehnung an die Hausinstallationstechnik werden mit L, N und PE die Phasenleitung, der Nullleiter und ein geerdeter Schutzleiter bezeichnet, über die auch eine Gleichspannungsversorgung durchführbar ist. Über einen Übertrager L1, der einseitig an einem lokalen Nullpotenzial GND liegen kann, wird die Information gleichsinnig, gleich getaktet, mit dem gleichen Vorzeichen auf die beiden Leitungen L und N aufgebracht. Hierzu bietet der Übertrager L1 wenigstens einen Anschluss, an dem eine Steuerungseinspeisung U stattfinden kann. Der Übertrager L1 liegt in Stromflussrichtung in den Leitungen L und N. Der Übertrager L1 hat für beide Leitungen L, N den gleichen Wicklungssinn. Die wirksame magnetische Kopplung zwischen den einzelnen Spulen des Übertragers L1 wird durch einen Ferritkern M gefördert. Sollen einzelne Potenzialverschiebungen durchgeführt werden, so wird eine Spannung über den Anschluss X3-1 auf den Übertrager L1, genauer auf die Primärwicklung des Übertragers, aufgebracht. An den Anschlüssen X2-1 und X2-2 lässt sich von den Leitungen L' und N' die aufgeprägte Information, wie eine Schaltinformation, in Form einer Potenzialverschiebung abgreifen. An dem Anschluss X2 ist ein weiterer Pin, nämlich der Anschluss X2-3, für den Schutzleiter PE' vorgesehen.

Die Primärwicklung des Übertragers L1 weist einen ohmschen Leitungswiderstand auf. Dieser Leitungswiderstand liegt mit der Induktivität der Primärwicklung L1 in Serie. Der Primärwicklung des Übertragers L1 kann, wie in Figur 1 dargestellt, ein zusätzlicher Widerstand R4 in Serie vorgeschaltet sein. Der eine Anschluss des Serienwiderstandes R4 ist mit der Steuerungseinspeisung U verbunden. Der eine Anschluss des Serienwiderstandes R4 ist mit dem Anschluss X3-1 verbunden. Der andere Anschluss des Serienwiderstandes R4 ist mit der Primärwicklung des Übertragers L1 verbunden. Der andere Anschluss des Serienwiderstandes R4 ist mit dem dem Anschluss GND, dem lokalen Nullpotenzial, der Primärwicklung leitungsmäßig gegenüberliegenden Anschluss der Primarwicklung verbunden. Die Serienschaltung von R4 und L1 bildet für sich betrachtet eine resistiv - induktive Impedanz, die zusammen mit dem ohmschen Widerstand der anderen Windungen bei der Signaleinkopplung wirksam wird.

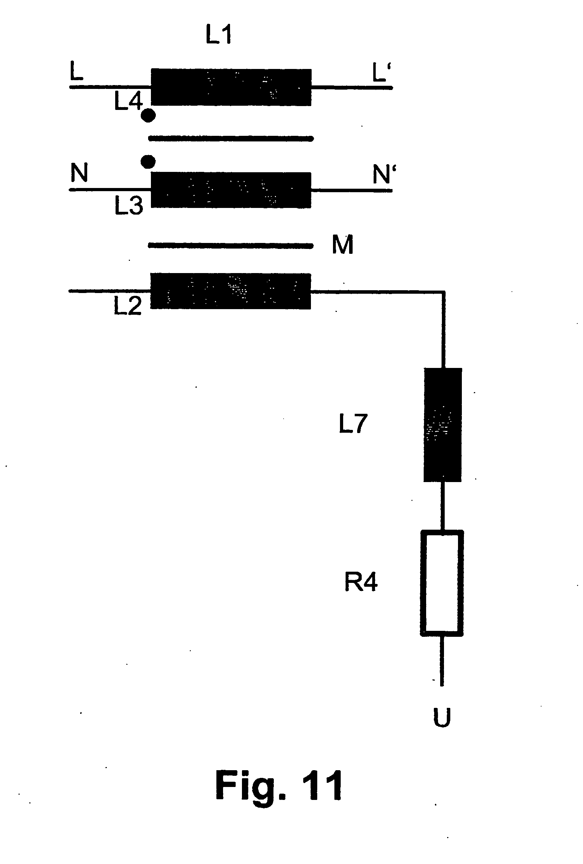

Zwischen Serienwiderstand R4 und Übertrager L1 kann, wie dies in Figur 11 gezeigt ist, eine Induktivität L7, wie eine Spule L7, in Serie geschaltet sein. In dem Schaltungszeichen kann sich der Fachmann auch die Streuinduktivität des Übertragers L1 abgebildet denken, ebenso in Widerstand R4 der Spulenwiderstand. Der Fachmann versteht, dass durch einen gesonderten Serienwiderstand R4, dessen Widerstandswert einstellbar, insbesondere von außen einstellbar ist, der Frequenzgang bzw. die Anpassung der Schaltung vorteilhaft beeinflusst werden kann. Zur Signalkompensation wird vorteilhaft die Streuinduktivität berücksichtigt und benutzt.

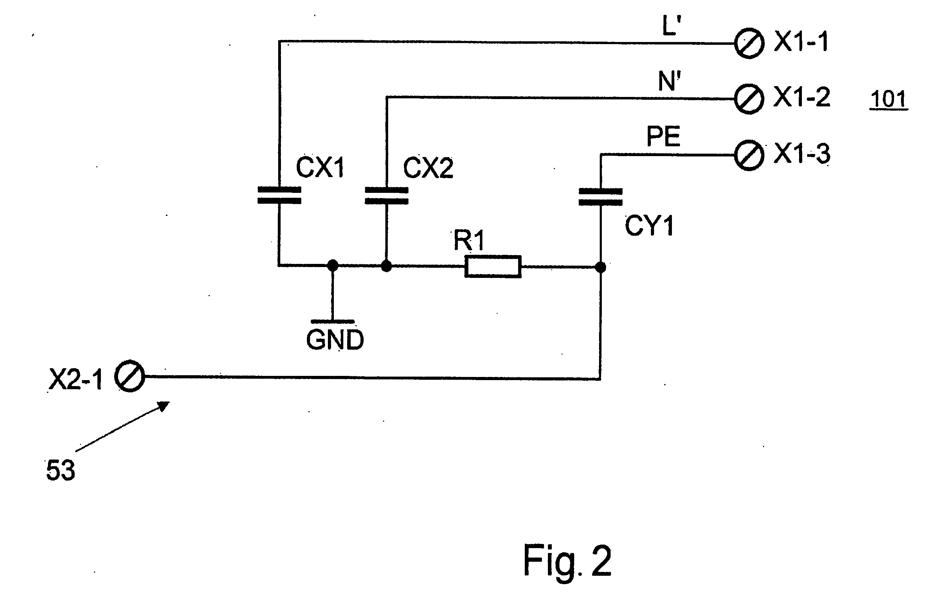

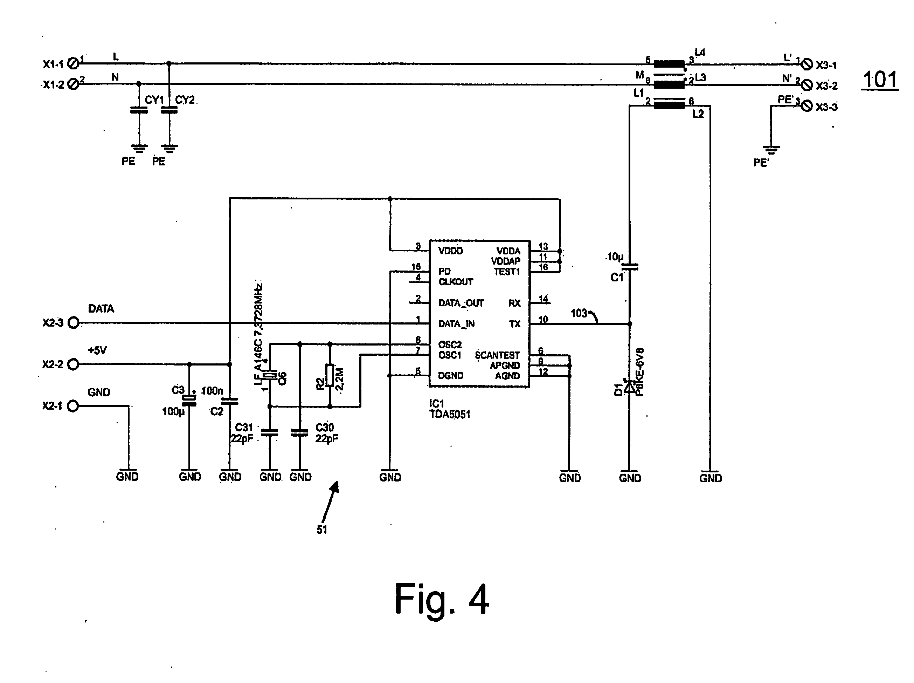

In Figur 2 wird ein Teil eines Empfängers 53 für die Benutzung in einem erfindungsgemäßen Kommunikationsverfahren über eine kommunikative Verbindung 101, die an einen Sender 51 der Figur 1 angeschlossen werden kann, dargestellt. Das eigentliche Informationssignal liegt an dem Widerstand R1 an. Der Widerstand R1 als Messimpedanz misst die Information in Form einer Spannung, die auch noch zusätzlich moduliert sein kann, über die in Sternschaltung betriebene Anschlussstelle zwischen den Entkopplungskapazitäten CX1 und CX2 auf der einen Seite und den entkoppelten Erdleiter PE auf der anderen Seite. Zur Entkopplung des Erdleiters PE ist wenigstens eine Erdleiterkapazität CY1 vorgesehen. Der Stempunkt zwischen den einzelnen Entkopplungskapazitäten CX1, CX2 wird als lokales Nullpotenzial GND betrachtet. Ein Abgriff ist somit an dem Anschluss X2-1 gegenüber dem lokalen Nullpotenzial GND zu detektieren. Bei einem mehrphasigen Energieversorgungssystem können entsprechend viele Entkopplungskapazitäten CX1, CX2 vorgesehen werden, so zum Beispiel bei einem Dreiphasenleitersystem insgesamt vier Entkopplungskapazitäten. Ein erfindungsgemäßes Übertragungssystem aus Sender 51 (siehe z. B. Fig. 1 und Fig. 4) und Empfänger 53 kann sowohl auf einem Einphasenleitersystem als auch auf einem Dreiphasen- oder höherphasigen Leitersystem unproblematisch angewendet werden. Unter "höherphasig" wird in diesem Zusammenhang ein Leitersystem mit zwei oder mehr als zwei Phasen verstanden. Es treten keine erhöhten Spannungen zwischen den Phasenleitern L, L' und dem Nullleiter N, N' auf. Die Strom- bzw. Spannungsversorgungsleitungen und die Schutzleiter sind an den Anschlüssen X1-1, X1-2, X1-3 anzuschließen.

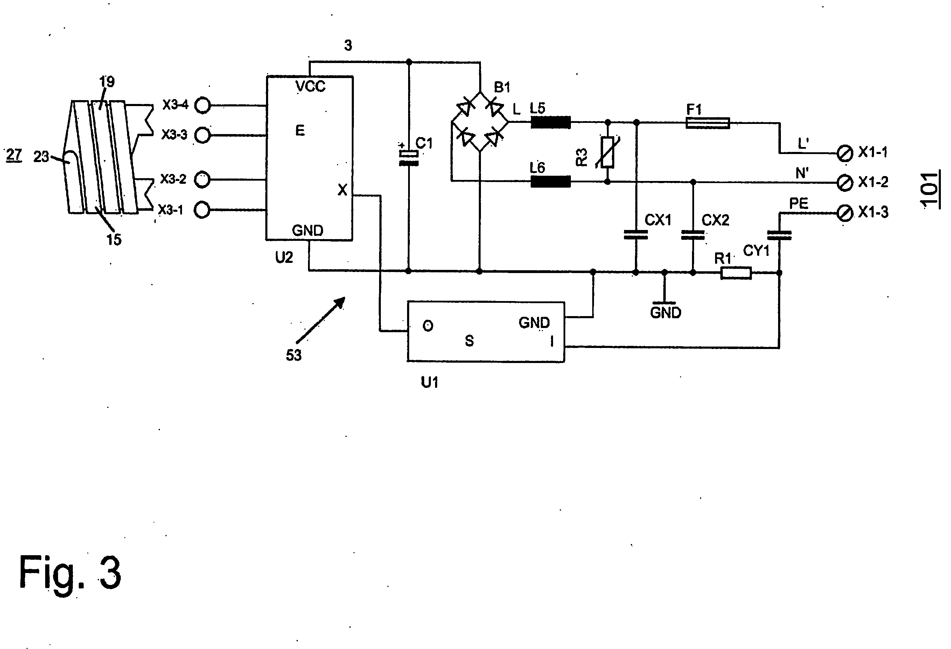

Über Verbindungsleitungen, wie zum Beispiel Stromleitungen, kann zwischen einem Sender 51 und einem Empfänger 53 eine kommunikative Verbindung 101 in Form einer leitungsgeführten Verbindung aufgebaut werden, die jeweils mit einem einseitigen Anschluss an dem jeweiligen Sender 51 bzw. Empfänger 53 in den Figuren 1, 2, 3, 4 und 5 dargestellt ist. Das Kommunikationssystem umfasst wenigstens einen Sender 51 und einen Empfänger 53. Figur 3 zeigt ein weiteres Ausführungsbeispiel eines Empfängers 53, der sowohl mit diskreten als auch mit integrierten Bauteilen aufbaubar ist. Der Empfänger 53 ist über Stromleitungen in einer kommunikativen Verbindung 101 mit einem Sender, der Teil eines Unterverteilers sein kann. Die Versorgungsspannung wird über den Anschluss X1-1 und über die Leitung L' sowohl für die Versorgung eines Endstromkreises 15 wie auch zur Auskopplung von Schaltinformationen über einen Messwiderstand oder eine Messimpedanz R1 verwendet. In dem Empfänger 53 sind Schaltkreise U1, U2 vorgesehen, die unterschiedliche Aufgaben wahrnehmen. Der Schaltkreis U1, der als integrierter Schaltkreis aufzubauen ist, übernimmt die Funktion eines Zustandfolgers. In Abhängigkeit von der Schaltinformation an den Anschlüssen I und GND gibt der Schaltkreis U1 ein Schaltsignal über den Ausgang O an weitere Schaltkreise, wie zum Beispiel an den Steuereingang X des Schaltkreises U2, weiter. Der Schaltkreis U2 liefert in Abhängigkeit eines Schaltpegels die Versorgungsspannung 3 an Beleuchtungsmittel 19, die zum Beispiel Lampen 23 (symbolisiert durch die Lampenfassung in Figur 3) sein können. In die Lampenfassung können eine oder mehrere Leuchtstoffröhren 27 eingelegt werden. Der Schaltkreis erstreckt sich zwischen den Anschlüssen X1 und X3. Für die Spannungsversorgung der Halbleiter ist ein Spannungsteil aufgebaut, umfassend den Gleichrichter B1, Filterdrosseln L5, L6, einen temperaturabhängigen Widerstand R3, eine Sicherung F1 und einen Glättungskondensator C1, das die notwendige Versorgungsspannung VCC für die weiteren Schaltkreise und den Endstromkreis 15 zur Verfügung stellen kann. Das aufgeprägte Informationssignal wird zwischen Kondensatoren CX1, CX2 und CY1 über eine Messimpedanz R1 abgegriffen. Der virtuelle Nullpunkt der Entkopplungskapazitäten CX1, CX2 stellt den lokalen Ground des lokalen Potenzials GND dar. Über Kondensatoren wird somit die Schaltinformation ausgekoppelt, während die Versorgungsspannung, auf der die Schaltinformation lagert, sowohl als Gleichspannung wie auch als Wechselspannung über Gleichrichtungskreise für die weitere Energieversorgung zur Verfügung stehen kann. Der Gleichrichter B1 richtet die Wechselspannung zwischen den Leitungen L und N bzw. N' gleich, während die Information zwischen den Leitungen L' und PE abgegriffen wird. Spezielle Anschlüsse X3-1, X3-2, X3-3 und X3-4 sind für den Anschluss von Beleuchtungskörpern wie Leuchtstoffröhren 27 gestaltet.

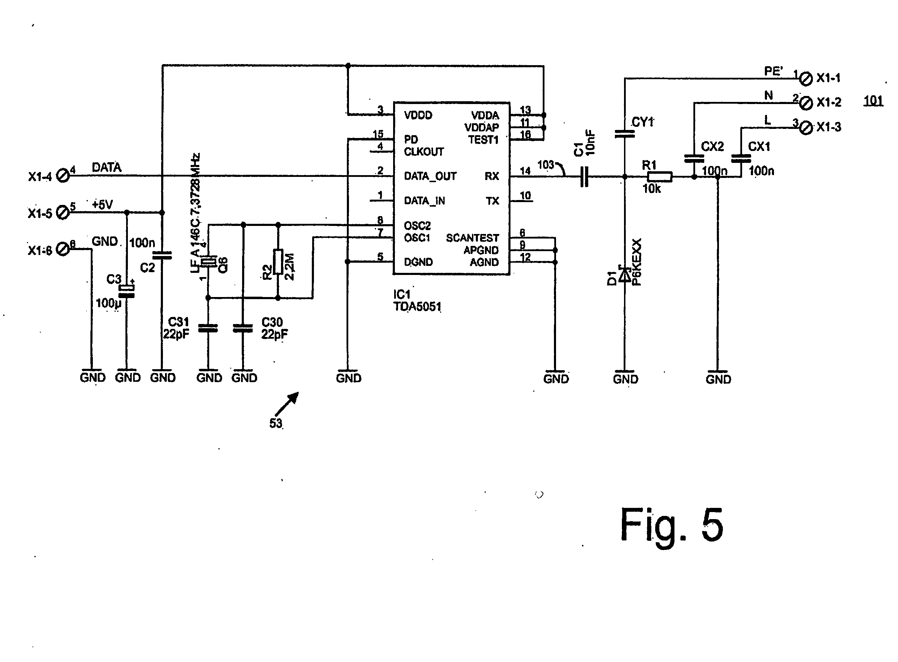

Die in den zuvor dargestellten Figuren 1 bis 3 eher schematisch abgebildeten Sender 51 und Empfänger 53 sind konkreter mit speziellen Powerline-Halbleitern als Sender in Figur 4 und als Empfänger in Figur 5 dargestellt. Der Sender 51 nach Figur 4 ist zentral um den Powerline-Halbleiter IC1, der zum Beispiel der TDA5051 sein kann, aufgebaut. Der TDA5051 ist ein integrierter Schaltkreis IC1, der viele Funktionen für eine Powerline-Kommunikation 103 schon anbietet. Die Powerline-Kommunikation 103 wird über einen Kondensator C1, gestützt durch eine Diode D1, auf die Versorgungsleitungen ausgekoppelt. Zum näheren Verständnis des Halbleiters wird auf die einschlägigen Datenblätter und Applikationsschriften verwiesen, aus denen auch die IC-Pinbezeichnungen zu entnehmen sind. Die Nummerierung um den IC1 entspricht der Nummerierung aus gängigen Datenblättern und ist daher für ein leichteres Verständnis, trotz anderweitiger Verwendung der gleichen Bezugszeichen in den übrigen Figuren, beibehalten worden. Von einer Datenquelle über den Anschluss X2, insbesondere X2-3, können Daten an den Data_in Pin1 des IC1 gegeben werden. Die Datenquelle kann ein Mikrocontroller sein. Die 5 Volt-Spannungsversorgung aus dem PinX2-2 wird über geeignete Kondensatoren C2, C3 geglättet. Der Powerline-Halbleiter IC1 wird aus einem Oszillator mit den Bauteilen Quarz Q6, Kondensator C31, Kondensator C30, Widerstand R2 getaktet. Zur besseren Datenübertragung bzw. zur Unterdrückung von Störsignalen sind auf den Versorgungsleitungen L, N Entkopplungskondensatoren CY1, CY2 zum geerdeten Schutzleiter PE' vorgesehen. Hinter den Entkopplungskapazitäten wird über einen Übertrager L1, der die Spulen L2, L3, L4 umfassen kann, das Datenprotokoll des Pins TX des IC1 auf die Versorgungsspannung aufgeschaltet, damit über die kommunikative Verbindung 101 neben der im Unterverteiler vorhandenen Versorgungsspannung auch eine Datenübertragung zu den Endstromkreisen erfolgen kann. Der Übertrager L1 lässt sich mit einem Ferritkern M aufbauen. Die Schaltung arbeitet mit einem virtuellen Potenzialnullpunkt. Der virtuelle Potenzialnullpunkt GND stellt das Nullpotenzial für die elektronischen Bauteile des Senders 51 dar. Wenn das Informationssignal auf der Versorgungsleitung und auf dem Nullleiter aufgeprägt ist, so wird zwischen Sender 51 und Empfänger 53 (Figur 5) von den Verbindungsleitungen L' und N' gesprochen. Parallel zu den Leitungen L' und N' gibt es einen geerdeten Schutzleiter PE'. Es ist nur noch an den Sender 51 über die Klemmen X3-1, X3-2, X3-3 ein normales NYM-Kabel zur kommunikativen Verbindung 101 anzuschließen. Für die Einbindung des Senders 51 sind nur drei Anschlussklemmen X1, X2, X3 vorzusehen.

Ein ähnlich aufgebauter Schaltkreis um den gleichen Halbleiter IC1, nämlich einem TDA5051, kann zur Realisierung eines Empfängers 53 genutzt werden, wobei der Spannungsabfall über eine Messimpedanz R1 an einen Lesepin RX des IC1 kapazitiv entkoppelt über die Kapazität C1 durchgeleitet werden kann. Der TDA5051 dient zur Powerline-Kommunikation 103. Zur Potenzialanhebung gibt es sowohl im Sender 51 als auch im Empfänger 53 eine Zenerdiode D1. Die Zenerdiode D1 kann zum Beispiel für eine Spannung von 6, 8 V ausgelegt sein. An dem Anschluss X1 eines Empfängers nach Figur 5 stehen hinter dem IC1 die Daten, die dem Anschluss Data_Out abgegriffen werden können, wieder unverfälscht und entkoppelt von der Versorgungsspannung zur Verfügung. Mit einem einzigen, mehradrigen Kabel lässt sich der Empfänger 53 in eine Gebäudeinstallation einbinden. Für die übrigen Schaltzeichen und deren schaltungsmäßige Anordnung, die jedem Elektroniker verständlich sind, wird auf die zuvor gemachten Ausführungen zu den Figuren 1, 2, 3 und 4 und auf die Bezugszeichenliste verwiesen.

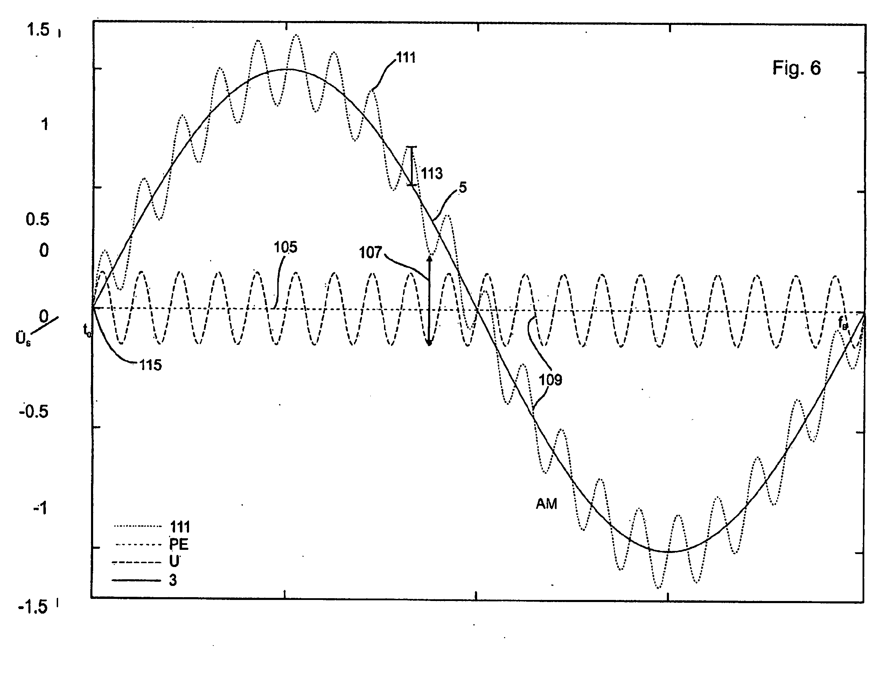

Figur 6 zeigt ein mögliches Übertragungsprotokoll auf den Leitungen L, N, L', N' und PE nach den Figuren 1 bis 5, auf denen im Normalfall eine Wechselspannungsversorgung 5 vorliegt.

Figur 6 zeigt ab dem Zeitschaltpunkt $t_0$ die überlagerte Powerline-Information der Powerline-Kommunikation 103 (siehe Figuren 4 und 5) auf dem Erdleiter PE und der Versorgungsspannung 3. Erdleiter PE verharrt auf einem Konstantpotenzial 105. Der Nullleiter schwingt mit der gleichen Synchronizität 109 und der gleichen Potenzialverschiebung 107 in die gleiche Spannungsrichtung wie die Versorgungsspannung 3, auf die eine zusätzliche Steuerungseinspeisung U aufgeprägt ist. Die zusätzliche Steuerungseinspeisung U wird in dem Maße aufgeprägt, dass eine ausreichende Bedämpfung 113 gegeben ist. Somit bleibt die Spannung zwischen Nullleiter und dem entsprechenden Phasenleiter unverändert und eine Informationsaufprägung kann über einen Vergleich mit dem Erdleiter PE oder einem geerdeten Leiter sichergestellt werden. Die Versorgungsspannung 3 erfährt durch die Spannungsaufprägung U eine zusätzliche Amplitude, so dass sich aus beiden Teilspannungen eine gesamte, überlagerte Spannungsamplitude 111 ergibt. Wie in Figur 6 dargestellt, kann die Schaltinformation zum Beispiel über eine Amplitudenmodifikation bzw. -modulation AM erfolgen. Alternativ bieten sich auch Frequenzmodulation oder Phasenmodulation oder eine Kombination aus den diversen Modulationsarten an. Der Start einer Informationsübertragung kann an Hand der Spannungsänderung 115 gegenüber dem Erdleiter PE detektiert werden.

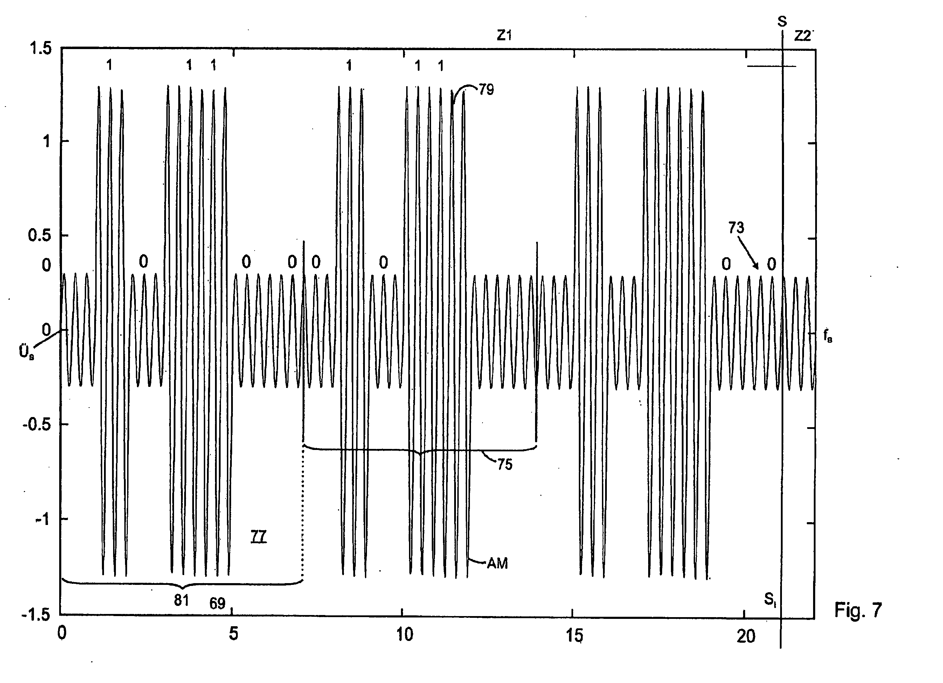

Figur 7 zeigt ein mögliches Frequenzband $f_B$, das sich aus zwei überlagerten Sinusschwingungen, einer Grundfrequenz und einem amplitudenmodulierten Informationssignal, zusammensetzt. Anhand der Amplitudenhöhe lässt sich ein gesetztes Bit 79 oder ein nicht gesetztes Bit dementsprechend als 1 oder 0 (bzw. auch in rezessiver Codierung) identifizieren. Die Amplitudenmodulation AM bestimmt den Übertragungsstart $\ddot{U}_s$. Eine Schaltinformation $S_I$ setzt sich aus der mehrfachen Wiederholung der einzelnen Informationspakete 69 zusammen. Die Prüfsumme 71 (nicht eingezeichnet) bildet sich durch die mehrfache Wiederholung der Informationspakete 69. Die Informationsübertragung 67 (nicht eingezeichnet) wird durch ein Informationspaketende 73 bestimmt. Mehrere einzelne Informationswiederholungen 75 schaffen die einzelnen Informationspakete 69. Beispielhaft ist eine digitale Datenübertragung 77 mit gesetzten Bits 79 dargestellt. Wenn die Information vollständig übertragen ist, wechselt der Empfänger, zum Beispiel U1 nach Figur 3, von einem ersten Zustand Z1 in einen zweiten Zustand Z2, um ein Schalten S zu veranlassen. In der Figur 7 ist die Befehlsfolge 81 mit den Bits 0101100 dargestellt, die jeweils ein Informationspaket 69 bildet. Der überlagerte Sinus auf dem Frequenzband $f_B$ lässt sich nur dadurch detektieren, dass eine Spannung gegenüber dem Schutzleiter oder dem geerdeten Leiter durchgeführt wird. Der z. B. durch den Schaltkreis U1 aufgebaute Zustandsfolger kann noch weitere Zustände identifizieren, z. B. einen dritten Zustand Z3 (nicht in Figur 7 eingezeichnet, der zum Beispiel in zeitlicher Abfolge auftreten würde).

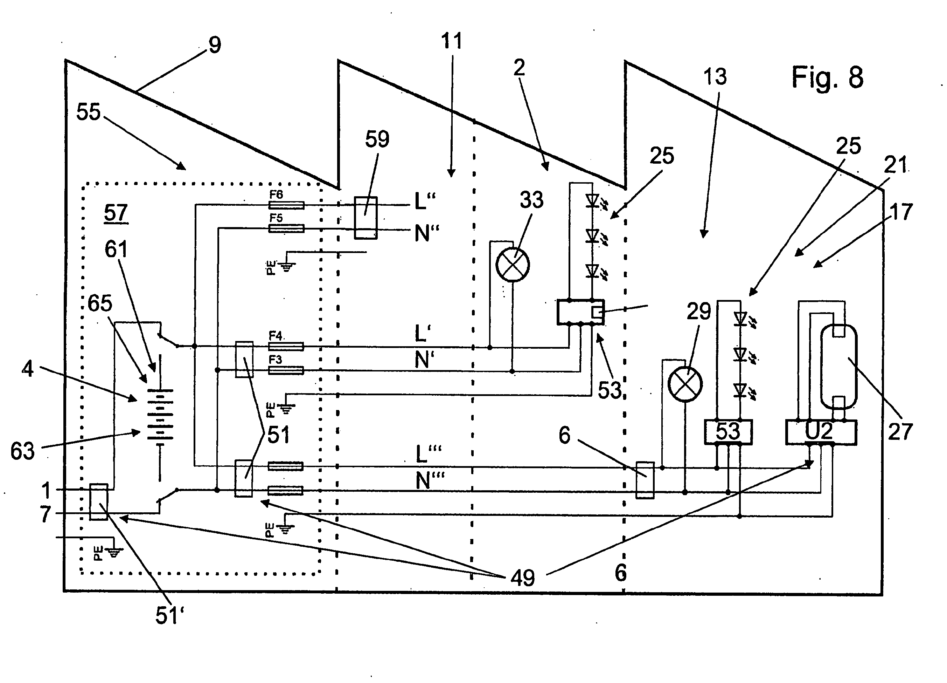

Figur 8 zeigt in schematischer Darstellung ein Hausinstallationsnetz in einem Gebäude 9, beispielsweise einem Gebäude, in dem öffentliche Aufführungen gezeigt werden, ein Fabrikgebäude etc., das an das Versorgungsstromnetz 1 mit wenigstens zwei der drei hausinternen Leitungen so angeschlossen ist, dass die Versorgungsenergie 7 in das gebäudeinterne Stromnetz eingeleitet werden kann. In dem Gebäude 9 ist eine Sicherheitsbeleuchtungsanlage 2 installiert. Die Gebäudeinstallation 11 in dem Gebäude 9 weist wenigstens einen Energieverteiler 55 auf, der zum Beispiel ein Hauptverteiler 57 sein kann. Alternativ können auch beliebig viele Unterverteiler 59 angeordnet werden. Das Kommunikationssystem 49 bildet sich zwischen wenigstens einem Sender 51, 51' und wenigstens einem Empfänger 53 über die Stromleitungen so aus, dass sich eine Gebäudeleittechnik 13 bilden lässt. Die Gebäudeinstallation 11, auf der eine Gebäudeleittechnik 13 vorhanden ist, und somit die Sicherheitsbeleuchtungsanlage 2, ist mit einer Notstromanlage 4 energetisch abgesichert. Die Notstromanlage 4 sichert einen Notstrombetrieb im Falle eines Ausfalles des Versorgungsstromnetzes 1. Der Sender 51 kann in dem Energieverteiler 55 angeordnet werden. Es können auch mehrere Sender 51, 51' in dem Energieverteiler 55 angeordnet werden. Die Sender 51 können auch nur im Nahbereich des Energieverteilers 55 angesiedelt sein, z. B. unmittelbar nach dem Energieverteiler wie in einem gemeinsamen (brandfesten) Raum. In Fig. 8 sind zwei Sender 51 und ein weiterer Sender 51' vorgesehen. Der weitere Sender 51' kann beispielsweise für den regulären Betrieb, den ersten Zustand Z1, vorgesehen sein. Der Sender 51' wird beim Aktivieren des Notbetriebes zusammen mit dem Versorgungsstromnetz 1 von der Notstromanlage 4 und somit von dem Verbrauchernetz 17 galvanisch abgekoppelt. Dadurch kann der wenigstens eine endstromseitige Empfänger 53 erkennen, dass ein Notbetrieb eingetreten ist. Der Sender 51 ist in Verbrauchsflussrichtung der Energie hinter der Notstromanlage 4 angeordnet. Der Sender 51 kann somit auch während des Notbetriebes mit dem wenigstens einen Empfänger 53 weiterhin kommunizieren. Der Empfänger 53 kann einzelnen Sicherheitslichtleuchten 29 vorgeschaltet werden. Andere Leuchten wie Leuchtstoffröhren 27 sind mit Schaltkreisen U2 wie Vorschaltgeräten ausgestattet. In einer Ausgestaltung kann eine Reflexionsunterdrückungsvorrichtung in dem Vorschaltgerät U2 angeordnet sein. Über die Leitungen L', N', L'', N'', L''', N''' gelangt die elektrische Energie von dem wenigstens einen Sender 51, 51' zu den Licht ausstrahlenden Endverbrauchern 25, die geeignete Empfänger 53 umfassen können. Zur Unterdrückung von Wellenreflexionen können Reflexionsunterdrückungsvorrichtungen, wie terminierende Widerstände 6, endstromseitig vorhanden sein. Durch die endseitige Reflexionsbedämpfung mittels einer Reflexionsunterdrückungsvorrichtung, wie einem Widerstand, werden rücklaufende Wellen auf den zwei Leitungen L, L', L'', L''', N, N', N'', N''' zur Energieversorgung unterhalb eines Störabstands im Vergleich zur Spannungsänderung 115 reduziert. In den wenigstens einen Empfänger 53 kann eine Reflexionsunterdrückungsvorrichtung, wie ein terminierender Widerstand 6, eingebaut sein. Die Reflexionsunterdrückungsvorrichtung kann aber auch aus mehr elektronischen Bauteilen wie nur einem Widerstand 6 bestehen. In einer Ausgestaltung sind in der Reflexionsunterdrückungsvorrichtung Bauteile für eine ohmsche, eine induktive und eine kapazitive Anpassung vorgehalten. Eine Reflexionsunterdrückungsvorrichtung, wie ein terminierender Widerstand 6, kann auch direkt in einem Beleuchtungskörper 21 angeordnet sein. Eine Reflexionsunterdrückungsvorrichtung, wie ein terminierender Widerstand 6, kann auch eine ganze Gruppe von Verbrauchern 17 abdecken. Eine Reflexionsunterdrückungsvorrichtung, wie ein terminierender Widerstand 6, kann endstromkreisseitig die Energieübertragungsleitungen L, L', L'', L''', N, N', N'', N''' abschließen.

Eine Reflexionsunterdrückungsvorrichtung, wie ein terminierender Widerstand 6, dient der Unterdrückung einer Wellenreflexion auf den Leitungen vor dem Endstromkreis. Eine Reflexionsunterdrückungsvorrichtung drückt eine Wellenreflexion herab, idealer Weise unter einen vorzuhaltenden Störabstand. Ein terminierender Widerstand 6 kann ein einstellbarer Widerstand, z. B. über Drehschalter (nicht dargestellt), sein, der endstromseitig so angeordnet sein kann, dass er zwar in einem Beleuchtungskörper 21 sitzt, aber von außen einstellbar ist. Es kann sich zum Beispiel um einen Drehwiderstand handeln. Durch die Anordnung von einzelnen Empfängern 53 und gewöhnlichen Vorschaltgeräten U2 lässt sich an ein und dem gleichen Stromnetz eine Lichtbetriebsanlage im Sinne der einschlägigen Normen innerhalb einer Gebäudeinstallation 11 realisieren. Zwei bis drei Leitungen, so wie in Figur 8 dargestellt, sind ausreichend, ein selektives An- und Ausschalten in Abhängigkeit eines Zustandes im Energieverteiler 55 für die Leuchten 29, 33 sicherzustellen. Der Schutzleiter bzw. der Erdleiter PE, auch alternativ ein geerdeter Leiter PE'', ist als Referenzleitung für die Verarbeitung der einzelnen Zustandserkennungen im Empfänger 53 an die, vorzugsweise an alle, Empfänger 53 herangeführt. Gleichzeitig übernimmt der Erdleiter PE die Aufgabe, einen Schutz für die übrigen Vorschaltgeräte U2 darzustellen. Wie in Figur 8 zu sehen ist, können neben den Hauptverteilern 57 auch beliebig viele Unterverteiler 59 vorhanden sein, die eigene Phasenleiter L'' und Nullleiter N'' für weitere Verbraucher 17 anbieten. Wenigstens ein Energieverteiler 55, wie zum Beispiel ein Unterverteiler 59, bezieht seine Notstromenergie aus einer Konstantenergiequelle 61, die eine Batterieanlage 63 oder auch eine Brennstoffzellenanlage 65 sein kann.

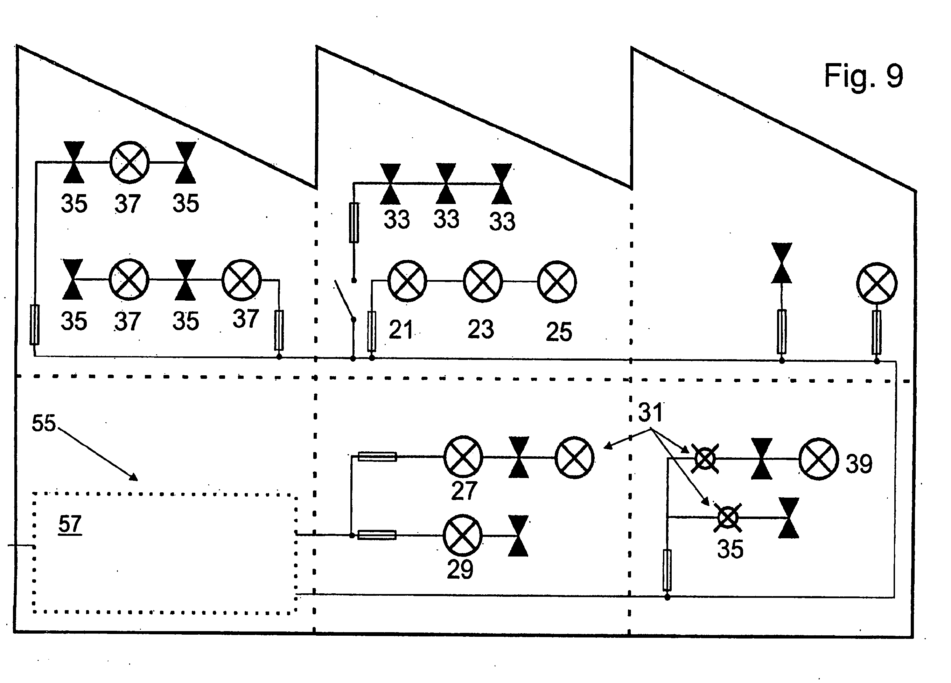

Figur 9 zeigt beispielhaft ein Beleuchtungsmuster, das von einem einzigen Energieversorgungskabel versorgt wird. Das Beleuchtungsmuster wird von einem Energieverteiler 55, hier einem Hauptverteiler 57, gespeist. Das Beleuchtungsmuster ist mit unterschiedlichen Beleuchtungskörpern 21 wie Lampen 23, Licht ausstrahlenden Endverbrauchern 25, Leuchtstoffröhren 27, Sicherheitslichtleuchten 29, Sicherheitsbeleuchtungsmitteln 31, Dauerlichtleuchten 33, Bereitschaftslichtleuchten 35, Alarmleuchten 37 sowie Warnleuchten 39 ein- und ausschaltbar. Vor einem Strang mit Beleuchtungskörpern 21 können endstromkreisbildende Sicherungen platziert werden. Dies kann so weit heruntergebrochen werden, dass vor jedem Beleuchtungskörper 21 ein endstromkreisbildendes Sicherungspaar angeordnet ist.

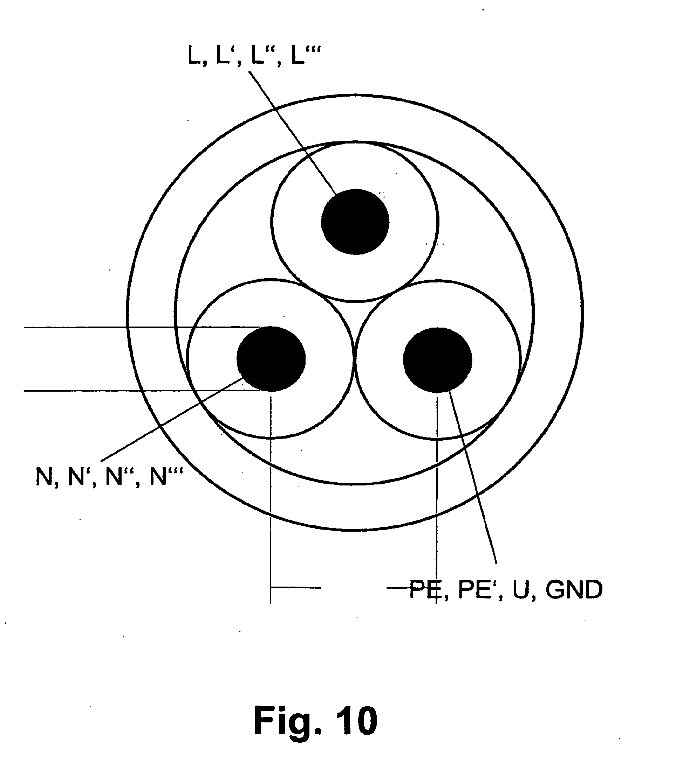

Figur 10 zeigt einen Querschnitt durch ein Kabel mit drei Leitern. Das Kabel kann für die Erfindung als Energieversorgungskabel und Datenleitungskabel genutzt werden. Das Kabel liegt vorzugsweise in der Gestaltung als E30-Leitung vor, wobei die Abkürzung "E30" "brandbeständig für 30 min" bedeutet. Der Aufbau ähnelt einer Lecher-Leitung bzw.

Lechersystem, wenngleich unter dem Begriff "Lecherleitung" der Fachmann in der Regel ein System nur aus zwei parallelen Leitungen versteht, sodass zumindest die Größenordnung des Wellenwiderstandes des reinen Kabels mittels den bekannten Gleichungen für Lechersysteme aus Leiterdurchmesser und Abstand bestimmt werden kann.

Im Falle von geschirmten E30-Leitungen kann die Größenordnung durch Analogie zur Koaxialleitung bestimmt werden. Längs eines Leitungsstückes bilden sich in beiden Fällen bekanntlich schon bei unverzweigter Leitungsführung stehende Wellen entsprechend der speisenden Frequenz und Leitungslänge aus. Die oben erwähnten Reflexionsunterdrückungsvorrichtungen, wie ein terminierender Widerstand 6, können zur Impedanzanpassung, d. h. zur Reflexionsunterdrückung, genutzt werden.

Der Wellenwiderstand, genauer Leitungswellenwiderstand, engl. characteristic impedance, ist bekanntlich eine Kenngröße längshomogener Leitungen, beispielsweise Kabel oder Einzeldrahtanordnungen, die aus wenigstens zwei elektrischen Leitern bestehen, wie eben Lecher-Leitungen. Der Leitungswellenwiderstand beschreibt das Verhältnis sich in eine gemeinsame Richtung ausbreitender Strom- und Spannungswellen zueinander. In einer elektrischen Leitung sind der Leitungswellenwiderstand und der Feldwellenwiderstand über die Geometrie der Leitungsberandung miteinander verknüpft. Oft wird der Leitungswellenwiderstand auch Kabelimpedanz oder Nennimpedanz einer Leitung genannt. Mittels der Reflexionsunterdrückungseinrichtung, wie einem terminierenden Widerstand 6, kann der Leitungswellenwiderstand günstig beeinflusst werden. Auf den Leitungswiderstand oder die Leitungsimpedanz angepasst wird wenigstens ein terminierender Beleuchtungskörper, wie Sicherheitstichleuchte, Dauerlichtleuchte oder Bereitschaftslichtleuchte, in dem Unterverteilernetz angeschlossen. Der Leitungswellenwiderstand und die Terminierung sind auf einander abgestimmt.

Die Wellenimpedanz von Sicherheitsbeleuchtungsnetzen kann je nach Topologie und auch abhängig vom Zustand von Schalteinheiten variieren. So können bestimmte Entstörkondensatoren in Leuchtmitteln auch bei Gleichtaktübertragung die kapazitive Last darstellen (wenn auch in um zumindest eine Größenordnung geringeren Maßen), welche umgelegt auf einen Leitungsbelag die Wellenkennimpedanz auf Werte zwischen 2 Ohm und 20 Ohm reduzieren kann, wie Versuche gezeigt haben. Sind die Schalteinheiten geöffnet, erhöht sich die Wellenkennimpedanz auf höhere Werte, meist zwischen 10 Ohm und 80 Ohm. Die durch einen Übertrager L1 hervorgerufene Streuinduktivität L7 kann Werte zwischen 1 $\mu$H und bei spezieller Ausführung bis hin zu 100 mH besitzen und kann vorteilhaft zur Unterdrückung höherer Frequenzen als die zur Kommunikation genutzten verwendet werden, einerseits um Störabstrahlung zu minimieren, andererseits um die Leistung, welcher der Sender ausgesetzt wird, bei transienten Störungen während des Umschaltvorgangs zu begrenzen. Sie bildet mit dem Ausgangswiderstand des Senders einen Tiefpass. Versuche mit verzweigten Netzen haben gezeigt, dass sich die Impedanz durch Verzweigungen auf Werte zwischen 120 Ohm und 500 Ohm erhöhen kann. In diesem Fall und bei über weite Bereiche angeschlossenen Leuchten wirkt sich eine verteilte Reflexionsunterdrückung, die mittels der Eingangsimpedanzen der Leuchten in der jeweiligen Verzweigung realisiert wird, besonders positiv aus.

Als Vorteile der Erfindung lässt sich u. a. zusammenfassen, dass die Erfindung ein effektives, effizientes, störsicheres und ausfallsicheres Kommunikationssystem bzw. ein Verfahren zu einer solchen Kommunikation für Sicherheitsbeleuchtungsanlagen bietet. Das Kommunikationsverfahren erlaubt die Realisierung eines digitalen, leitungssynchronen, vollsymmetrischen, selbstkorrigierenden Digitalsystems, das insbesondere mit Hilfe von pulsfreien harmonischen Signalen arbeiten kann. Die aufzuprägenden Kommunikationssignale sind induktiv, bzw. galvanisch getrennt, einkoppelbar. Durch die idealerweise gleichmäßige Potenzialverschiebung auf beiden Leitern werden die Signale von angeschlossenen Verbrauchern nur gering und in richtigen Maß bedämpft, so dass Wellenreflexionen so beeinflusst werden, dass die störsichere Kommunikation auch bei ausgedehnten und verzweigten Leitungsführungen gewährleistet ist. Die Kommunikationssignale sind Halbleiter gestützt generierbar, welche verlustleistungsarm arbeiten. Die Kommunikationssignale sind Halbleiter gestützt empfangbar; durch die gezeigten Schutzschaltungen eignet sich das System für die Umschaltung zwischen verschiedenen Energiequellen. Und mittels spezieller Y-Kondensatoren kann es auch bei Netzspannung genutzt werden. In einer Ausgestaltung liegt das Frequenzband des Kommunikationssystems in einem bestimmten Störabstand vom Frequenzband der Versorgungsenergie. Das unerwünschte Eindringen von hochfrequenten Kommunikationssignalen in das Versorgungsnetz über die Phasenleiter, die Nullleiter bzw. die Erdleiter wird durch entsprechende Filterung, insbesondere Tiefpassfilterung, unterbunden. Die Auskopplung der Kommunikationssignale erfolgt mittels entsprechender Filterung, insbesondere bandpassgefiltert, über einen erdfreien Messwiderstand. Das

Übertragungsverfahren ermöglicht zudem die Rücksendung von Informationen über den Zustand jeder angeschlossenen Leuchte. Somit erfüllt es die Anforderungen für eine moderne, kostengünstige, energiesparende und flexibel zu gestaltende Sicherheitsbeleuchtungsanlage, bei der man zuverlässig die Leuchten nach Bedarf schalten und überwachen kann.

In den Abbildungen der Figuren sind in Bezug auf die geeigneten Netze die Bereiche graphisch dargestellt worden, die das kommunikative Prinzip zwischen Sender 51, 51' und Empfänger 53 darstellen. Die Sicherheitsbeleuchtungsanlagen können zentralversorgt, gruppenweise unterversorgt und auch bereichsweise zentralversorgt gestaltet sein. Mit dem Begriff "bereichsweise zentralversorgte Sicherheitsbeleuchtungsanlage" sind solche Sichefieitsbeleuchtungsanlagen 2 gemeint, die insbesondere gegenüber der Allgemeinversorgung zumindest bereichsweise separierte Stromleitungen besitzen. Weitere Typen von Sicherheitsbeleuchtungsanlagen 2 sind solche mit Einzelbatterieleuchten, für die das erfindungsgemäße Prinzip nur eine geringere Bedeutung hat. Zur zentralen Versorgung kommen Ersatzstromquellen zum Einsatz; im Sinne dieser Beschreibung sind das beispielsweise zentrale Stromversorgungssysteme, auch als CPS-Systeme bezeichnet, Central Power Supply Systems, ohne oder mit Leistungsbegrenzung, bzw. LPS-Systeme, Low Power Supply Systems, Gruppenbatterieanlagen, Zentralbatterieanlagen, Ersatzstrom-, Schnell- und Sofortbereitschaftsaggregate und besonders gesicherte Netze.

Wie durch die Ausführungsbeispiele gezeigt ist, wird mit wenigen Schaltungsergänzungen, die zum Beispiel in einem Gehäuse eines Vorschaltgerätes U2 und in einem Unterverteiler angeordnet werden können, aus einer regulären Spannungsversorgung für Beleuchtungskörper eine sehr kompakte und gleichzeitig zuverlässige Datenübertragung für eine Gebäudeleittechnik realisiert. Eine Spannungsformveränderung mit ihren zahlreichen Fehlereinflüssen ist nicht mehr notwendig, um Sicherheitslichtleuchten zuverlässig betreiben zu können. Eine Spannungserhöhung oder Spannungserniedrigung mit einhergehender Alterung der Endstromverbraucher oder einer Verringerung der Lichtausbeute tritt ebenfalls nicht mehr auf.

Obwohl nur wenige Ausführungsbeispiele offenbart sind, versteht jeder Fachmann, dass vorliegende Erfindung auch auf Energieverteilungsnetze anzuwenden ist, die über einen klassischen Beleuchtungsmischbetrieb hinaus mit weiteren Endstromkreisen aufgebaut sind. Die übertragbare Schaltinformation kann sowohl Beleuchtungsmittel ein- und ausschalten als auch deren Intensität und Beleuchtungsstärke steuern. Das fehlerunanfällige Übertragungsprotokoll, das auch in Unterverteilernetzen mit beliebigen Sicherungsautomaten arbeiten kann, baut eine in einem Empfänger auswertbare Beziehung zwischen einem geerdeten Leiter, einem Erdleiter oder einem Schutzleiter auf der einen Seite und einer Leitung für die normale Energieversorgung auf der anderen Seite auf.

Die zuvor dargelegten Schaltungsvarianten lassen sich mit Mikrocontrollern besonders vorteilhaft realisieren. Geeignete Mikrocontroller sind z. B. ein STM32F103x4 oder ein STM32F103x6 von dem Halbleiterhersteller ST. Als Alternative bietet sich ein MSP430F550x von dem Halbleiterhersteller Texas Instruments an. Ebenso können die so genannten Piccolo Mikrocontroller von dem Halbleiterhersteller Texas Instruments genutzt werden (z. B. TMS320F28027 oder z. B. TMS320F280200). Der Stromwert lässt sich gut über einen Stromsensor messen, z. B. über einen Sensor, der nach dem Hall-Prinzip misst. Ein Stromsensor in Halbleiterform, der nach dem Hallprinzip arbeitet, ist der CSA-1V von dem Halbleiterhersteller Sentron. An Stelle der mit U1 bezeichneten Schaltung in Figur 3 kann einer der zuvor genannten Mikrocontroller verbaut werden.

**Bezugszeichenliste**

| Bezugszeichen | Bedeutung | Graphische Wiedergabe |
|---|---|---|
| 1 | Versorgungsstromnetz | Fig. 1, Fig. 8 |
| 2 | Sicherheitsbeleuchtungsanlage | Fig. 8 |
| 3 | Versorgungsspannung | Fig. 3, Fig. 4, Fig. 6 |
| 4 | Notstromanlage | Fig. 8 |
| 5 | Wechselspannungsversorgung | Fig. 6 |
| 6 | terminierender Widerstand | Fig. 8 |
| 7 | Versorgungsenergie | Fig. 8 |
| 9 | Gebäude | Fig. 8 |
| 11 | Gebäudeinstallation | Fig. 8 |
| 13 | Gebäudeleittechnik | Fig. 8 |
| 15 | Endstromkreis | Fig. 3 |
| 17 | Verbraucher | Fig. 8 |
| 19 | Beleuchtungsmittel | Fig. 3 |

(fortgesetzt)

| Bezugszeichen | Bedeutung | Graphische Wiedergabe |
|---|---|---|
| 21 | Beleuchtungskörper | Fig. 9 |
| 23 | Lampen | Fig. 3, Fig. 9 |
| 25 | Lichtaustrahlende Endverbraucher | Fig. 8, Fig. 9 |
| 27 | Leuchtstoffröhren | Fig. 3, Fig. 9 |
| 29 | Sicherheitslichtleuchte | Fig. 8, Fig. 9 |
| 31 | Sicherheitsbeleuchtungsmittel | Fig. 9 |
| 33 | Dauerlichtleuchte | Fig. 8, Fig. 9 |
| 35 | Bereitschaftslichtleuchte | Fig. 9 |
| 37 | Alarmleuchte | Fig. 9 |
| 39 | Warnleuchte | Fig. 9 |
| 49 | Kommunikationssystem | Fig. 8 |
| 51, 51' | Sender | Fig. 1, Fig. 4, Fig. 8 |
| 53 | Empfänger | Fig. 2, Fig. 3, Fig. 5, Fig. 8 |
| 55 | Energieverteiler | Fig. 8 |
| 57 | Hauptverteiler | Fig. 8 |
| 59 | Unterverteiler | Fig. 8 |
| 61 | Konstantenergiequelle | Fig. 8 |
| 63 | Batterieanlage | Fig. 8 |
| 65 | Brennstoffzellenanlage | Fig. 8 |
| 67 | Informationsübertragung | Fig. 7 |
| 69 | Informationspaket | Fig. 7 |
| 71 | Prüfsumme | Fig. 7 |
| 73 | Informationspaketende | Fig. 7 |
| 75 | Informationswiederholung | Fig. 7 |
| 77 | Digitale Datenübertragung | Fig. 7 |
| 79 | Gesetztes Bit | Fig. 7 |
| 81 | Befehlsfolge | Fig. 7 |
| 101 | Kommunikative Verbindung | Fig. 1, Fig. 2, Fig. 3, Fig. 4, Fig. 5 |
| 103 | Powerline-Kommunikation | Fig. 4, Fig. 5 |
| 105 | Konstantpotenzial | Fig. 6 |
| 107 | Potenzialverschiebung, insbesondere periodische Potenzialverschiebung | Fig. 6 |
| 109 | Synchronizität | Fig. 6 |
| 111 | Spannungsamplitude | Fig. 6 |
| 113 | Bedämpfung | Fig. 6 |
| 115 | Spannungsänderung | Fig. 6 |
| L, L' | Erste Leitung zur Energieversorgung | Fig. 1, Fig. 2, Fig. 3, Fig. 4, Fig. 5, Fig. 8 |
| L, L', L", L'" | Phasenleiter bzw. Phasenleitung | Fig. 1, Fig. 2, Fig. 3, Fig. 4, Fig. 5, Fig. 8 |

(fortgesetzt)

| Bezugzeichen | Bedeutung | Graphische Wiedergabe |
|---|---|---|
| N, N' | Zweite Leitung zur Energieversorgung | Fig. 1, Fig. 2, Fig. 3, Fig. 4, Fig. 5, Fig. 6, Fig. 8 |
| N, N', N'', N''' | Nullleiter | Fig. 1, Fig. 2, Fig. 3, Fig. 4, Fig. 5, Fig. 8 |
| PE | Erdleiter | Fig. 1, Fig. 2, Fig. 3, Fig. 4, Fig. 6 |
| PE' | Schutzleiter | Fig. 1, Fig. 4, Fig. 5 |
| PE'' | Geerdeter Leiter | Fig. 8 |
| GND | Lokales Nullpotenzial | Fig. 1, Fig. 2, Fig. 3, Fig. 4, Fig. 5 |
| AM | Amplitudenmodulation | Fig. 6, Fig. 7 |
| B1 | Gleichrichter, insbesondere Brückengleichrichter | Fig. 3 |
| C1 | Kondensator | Fig. 3, Fig. 4, Fig. 5 |
| C2 | Kondensator | Fig. 4, Fig. 5 |
| C3 | Kondensator | Fig. 4, Fig. 5 |
| C30 | Kondensator | Fig. 4, Fig. 5 |
| C31 | Kondensator | Fig. 4, Fig. 5 |
| CX1 | Erste Entkopplungskapazität | Fig. 2, Fig. 3, Fig. 5 |
| CX2 | Zweite Entkopplungskapazität | Fig. 2, Fig. 3, Fig. 5 |
| CY1 | Erdleiterkapazität | Fig. 1, Fig. 2, Fig. 3, Fig. 4 |
| CY2 | Erdleiterkapazität | Fig. 1, Fig. 4 |
| D1 | Zenerdiode | Fig. 4, Fig. 5 |
| Data_In, Data_Out | Daten | Fig. 4, Fig. 5 |
| F1 | Sicherung | Fig. 3 |
| F3, F4, F5, F6 | Sicherung | Fig. 8 |
| $f_B$ | Frequenzband | Fig. 7 |
| I | Input-Pin bzw. Anschluss | Fig. 3 |
| IC1 | Integrierter Schaltkreis, insbesondere zur Powerlinekodierung | Fig. 4, Fig. 5 |
| L1 | Übertrager, insbesondere induktiver Übertrager, der mehrere Wicklungen umfasst | Fig. 1, Fig. 4 |
| L2 | Spule oder erste Wicklung des Ubertragers | Fig. 1, Fig. 4 |
| L3 | Spule oder zweite Wicklung des Ubertragers | Fig. 1, Fig. 4 |
| L4 | Spule oder dritte Wicklung des Ubertragers | Fig. 1, Fig. 4 |
| L5 | Filterdrossel | Fig. 3 |
| L6 | Filterdrossel | Fig. 3 |
| L7 | Spule, insbesondere als Serieninduktivität | Fig. 11 |
| M | Ferritkern | Fig. 1, Fig. 4. |
| O | Output-Pin bzw. Ausgang, insbesondere zur Ausgabe eines Schaltsignals | Fig. 3 |
| Q6 | Quartz, insbesondere als Oszillatorquarz | Fig. 4, Fig. 5 |

(fortgesetzt)

| Bezugszeichen | Bedeutung | Graphische Wiedergabe |
|---|---|---|
| R1 | Messimpedanz, insbesondere Messwiderstand | Fig. 2, Fig. 3, Fig. 5 |
| R2 | Widerstand, insbesondere Oszillatorwiderstand | Fig. 4, Fig. 5 |
| R3 | Temperaturabhängiger Widerstand | Fig. 3 |
| R4 | Widerstand, insbesondere Serienwiderstand | Fig. 1 |
| RX | Lesepin | Fig. 4, Fig. 5 |
| $S_I$ | Schaltinformation | Fig. 7 |
| S | Schalten | Fig. 7 |
| $t_0$ | Zeitschaltpunkt | Fig. 6 |
| TX | Pin | Fig. 4, Fig. 5 |
| U | Steuerungseinspeisung bzw. Spannungsaufprägung, insbesondere induktive | Fig. 1, Fig. 6 |
| U1 | Schaltkreis, insbesondere als Zustandsfolger | Fig. 3 |
| U2 | Schaltkreis, insbesondere als Vorschaltgerät | Fig. 3, Fig. 8 |
| $U_s$ | Ubertragungsstart | Fig. 7 |
| VCC | Versorgungsspannung, insbesondere an einzelnen Baugruppen | Fig. 3 |
| X | Steuereingang | Fig. 3 |
| X1-1 | Platinenanschluss, insbesondere Leitungsanschluss des ersten Anschluss | Fig. 1, Fig. 2, Fig. 3, Fig. 4, Fig. 5 |
| X1-2 | Platinenanschluss, insbesondere Leitungsanschluss des ersten Anschluss | Fig. 1, Fig. 2, Fig. 3, Fig. 4, Fig. 5 |
| X1-3 | Platinenanschluss, insbesondere, Leitungsanschluss des ersten Anschluss | Fig. 2, Fig. 3, Fig. 5 |
| X1-4 | Platinenanschluss, insbesondere Leitungsanschluss des ersten Anschluss | Fig. 5 |
| X1-5 | Platinenanschluss, insbesondere Leitungsanschluss des ersten Anschluss | Fig. 5 |
| X1-6 | Platinenanschluss, insbesondere Leitungsanschluss des ersten Anschluss | Fig. 5 |
| X2-1 | Platinenanschluss, insbesondere Leitungsanschluss des zweiten Anschluss | Fig. 1, Fig. 2, Fig. 4 |
| X2-2 | Platinenanschluss, insbesondere Leitungsanschluss des zweiten Anschluss | Fig. 1, Fig. 4 |
| X2-3 | Platinenanschluss, insbesondere Leitungsanschluss des zweiten Anschluss | Fig. 1, Fig. 4 |
| X3-1 | Platinenanschluss, insbesondere Leitungsanschluss des dritten Anschluss | Fig. 1, Fig. 3, Fig. 4 |
| X3-2 | Platinenanschluss, insbesondere Leitungsanschluss des dritten Anschluss | Fig. 3, Fig. 4 |

(fortgesetzt)

| Bezugszeichen | Bedeutung | Graphische Wiedergabe |
|---|---|---|
| X3-3 | Platinenanschluss, insbesondere Leitungsanschluss des dritten Anschluss | Fig. 3, Fig. 4 |
| X3-4 | Platinenanschluss, insbesondere Leitungsanschluss des dritten Anschluss | Fig. 3 |
| Z1 | Erster Betriebszustand | Fig. 7 |
| Z2 | Zweiter Betriebszustand | Fig. 7 |
| Z3 | Dritter Betriebszustand | Fig. 7 |

**Patentansprüche**

1. Verfahren zur Kommunikation innerhalb eines endseitigen Versorgungsstromnetzes (1) im Rahmen einer Sicherheitsbeleuchtungsanlage (2),
mit dem endstromkreisbildende (15) Beleuchtungskörper (21) wie Lampen (23), Leuchtstoffröhren (27) und Licht ausstrahlende Verbraucher (25),
die aus dem Versorgungsstromnetz (1) energetisch gespeist werden,
zu steuern sind,
zurückgreifend auf einen Sender (51),
wobei der Sender (51) und ein mit wenigstens einem Empfänger (53) ausgestatteter Endstromkreis (15)
über wenigstens zwei Leitungen (L, L', L", N, N', N") zur Energieversorgung
und
über wenigstens einen Schutzleiter (PE, PE', PE")
in kommunikative Verbindung (101) zu bringen sind,
**dadurch gekennzeichnet, dass**
die Sicherheitsbeleuchtungsanlage (2) mit einer Notstromanlage (4) ausgestattet ist und ein Energieverteiler (55) einer Gebäudeinstallation (11) vorhanden ist,
mit dem der Sender (51) in kommunikativer Verbindung (101) anordenbar ist,
wobei die Kommunikation innerhalb des endseitigen Versorgungsstromnetzes (1), das eine Reflexionsbedämpfung in einem Beleuchtungskörper (21) umfasst,
auf Basis einer Powerline-Kommunikation (103) in einem endstromseitig freigegebenen Frequenzband ($f_B$) zwischen 95 kHz und 148,5 kHz erfolgt
und Daten (Data_In, Data_Out, 77) zwischen dem Sender (51) und dem wenigstens einen Endstromkreis (15) derart übertragbar sind,
dass der Empfänger (53) seine auszuführende Befehlsfolge (81) aufgrund einer Potenzialverschiebung (107) beider Energieversorgungsleitungen (L, L', L", N, N', N") startet, während der Schutzleiter (PE, PE', PE") zeitgleich auf einem Konstantpotenzial (105) gehalten wird.

2. Verfahren zur Kommunikation nach Anspruch 1,
**dadurch gekennzeichnet, dass**
in einem ersten Zustand (Z1), dem regulären Betriebszustand mit Wechselspannungsversorgung (5), die eine der wenigstens zwei Energieversorgungsleitungen (L, L', L", N, N', N") eine Phasenleitung (L, L', L") eines Phasenleiters ist, ein weiterer der wenigstens zwei Energieversorgungsleitungen ein Nullleiter (N, N', N") ist und der Schutzleiter (PE, PE', PE") ein geerdeter Leiter ist, wobei
insbesondere die durchgeführte Potenzialverschiebung (107) sowohl auf wenigstens einem Phasenleiter (L, L', L")
als auch im gleichen Maße auf dem Nullleiter (N, N', N") durchzuführen ist.

3. Verfahren zur Kommunikation nach Anspruch 3,
**dadurch gekennzeichnet, dass**
die Potenzialverschiebung (107) des Phasenleiters (L, L', L") als auch des Nullleiters (N, N', N") zeitgleich und vorzeichengleich, insbesondere durch induktive Spannungsaufprägung (U), erfolgt, um vorzugsweise an Hand einer zeitweiligen Spannungsänderung (115) gegenüber dem Erdleiter (PE, PE', PE") einen Übertragungsstart ($Ü_S$) von Schaltinformationen ($S_I$) zu detektieren.

**4.** Verfahren zur Kommunikation nach einem der vorhergehenden Ansprüche,
**dadurch gekennzeichnet, dass**
eine Informationsübertragung (67) durch eine periodische Potenzialverschiebung (107) des Phasenleiters (L, L', L") und des Nullleiters (N, N', N") erfolgt, wobei insbesondere die Informationsübertragung (67) paketweise (69) erfolgt, und hierbei jedes einzelne Paket durch eine, vorzugsweise selbstkorrigierende, Prüfsumme informationell abgeschlossen wird, die beispielsweise durch eine mehrfache, redundante Informationswiederholung (75) bildbar ist.

**5.** Verfahren zur Kommunikation nach einem der vorhergehenden Ansprüche,
**dadurch gekennzeichnet, dass**
das Verfahren auf einer Powerline-Kommunikation (103) in einem endstromseitig freigegebenen Frequenzband (fB) zwischen 95 kHz und 125 kHz basiert, wobei vorzugsweise die periodische, variierende Potenzialverschiebung (107) eine größere Bedämpfung (113) als 50 dB zu einer geringst zulässigen Spannungsamplitude (111) des Versorgungsstromnetzes (1) aufweist und die Informationsübertragung (67) in einer Amplituden-, Frequenz- oder Phasenmodulation (AM) kodiert ist.

**6.** Verfahren zur Kommunikation nach einem der vorhergehenden Ansprüche,
**dadurch gekennzeichnet, dass**
die Informationsübertragung (67) das selektive Schalten (S) von Sicherheitsbeleuchtungsmitteln (31), wie Bereitschaftslichtleuchten (35), aus einer Gruppe von Beleuchtungskörpern (21) hervorruft, wobei vorzugsweise zwischen Phasenleiter (L, L', L"), Nullleiter (N, N', N") und Erdleiter (PE, PE', PE"), Beleuchtungskörper (21) unterschiedlicher Kategorien, wie Dauerlichtleuchten (33), Bereitschaftslichtleuchten (35) und geschaltete Bereitschaftslichtleuchten, Alarmleuchten (37) und Warnleuchten (39), parallel zueinander elektrisch verschaltet sind.

**7.** Verfahren zur Kommunikation nach einem der vorhergehenden Ansprüche,
**dadurch gekennzeichnet, dass**
eine gegenüber dem Erdleiter (PE, PE', PE") positive Potenzialverschiebung (107) auf dem Phasenleiter (L, L', L") und Nullleiter (N, N', N") einem gesetzten Bit (79) einer digitalen Datenübertragung (77) der Informationsübertragung (67) entspricht und eine negative Potenzialverschiebung (107) auf dem Phasenleiter (L, L', L") und dem Nullleiter (N, N', N") einem rezessiven Bit der digitalen Datenübertragung (77) entspricht.

**8.** Verfahren zur Kommunikation nach einem der vorhergehenden Ansprüche,
**dadurch gekennzeichnet, dass**
durch eine endseitige Reflexionsbedämpfung mittels Widerstand, der vorzugsweise in einem Beleuchtungskörper (21) angeordnet ist, rücklaufende Wellen auf den zwei Leitungen (L, L', L", N, N', N") zur Energieversorgung unterhalb eines Störabstands im Vergleich zur Spannungsänderung (115) reduziert werden.

**9.** Kommunikationssystem (49) über Versorgungsleitungen (L, L', L", N, N', N") einer Sicherheitsbeleuchtungsanlage (2) mit Notstromanlage (4), mit der 2 Beleuchtungskörper (21) als endstromkreisseitige Verbraucher (17), die als Sicherheitslichtleuchten (29) dienen, insbesondere nach einem Verfahren nach den Ansprüchen 1 bis 8, steuerbar sind,
wenigstens einen Sender (51) umfassend, der zwischen Energieeinspeisung des Gebäudes (9) und einem Empfänger (53) angeordnet ist, und
wenigstens einen Empfänger (53) umfassend, der zur Steuerung wenigstens einer Sicherheitslichtleuchte (29) vor den Endstromkreis (15) geschaltet ist, und
wenigstens drei elektrische Leitungen (L, L', L", N, N', N", PE, PE', PE") umfassend, von denen wenigstens zwei Leiter (L, L', L", N, N', N") zur Energieübertragung bestimmt sind und
von denen wenigstens ein Leiter als Schutzleiter (PE, PE', PE") dient,
**dadurch gekennzeichnet, dass**
die Kommunikation zwischen Sender (51) und Empfänger (53) durch eine Potenzialverschiebung (107) von zwei der drei Leitungen (L, L', L", N, N', N", PE, PE', PE"), insbesondere den beiden Energieübertragungsleitern (L, L', L", N, N', N") erfolgt, während der Schutzleiter (PE, PE', PE") auf einem Konstantpotenzial (105) verbleibt.

**10.** Kommunikationssystem (49) nach Anspruch 9,
**dadurch gekennzeichnet, dass**
von den Energieübertragungsleitungen (L, L', L", N, N', N") eine Leitung in einem ersten, wechselspannungsführenden Betriebszustand (Z1), ein Phasenleiter (L, L', L") ist und von den Energieübertragungsleitungen (L, L', L", N, N', N") eine Leitung ein Nullleiter (N, N', N") ist und der wenigstens eine Schutzleiter (PE, PE', PE") ein Erdleiter ist.

**11.** Kommunikationssystem (49) nach einem der Ansprüche 9 bis 10,
**dadurch gekennzeichnet, dass**
die Potenzialverschiebung (107) synchron und spannungsgleich durchgeführt wird.

**12.** Kommunikationssystem (49) nach einem der Ansprüche 9 bis 11,
**dadurch gekennzeichnet, dass**
mit dem Verteiler (55) eine Konstantenergiequelle (61), wie eine Batterieanlage (63) oder eine Brennstoffzellenanlage (65), verschaltet ist, die die Versorgungsspannung (3) an die Endstromkreise (15) sicherstellt und insbesondere der Sender (51) im Bereich eines Energieverteilers (55) des Gebäudes (9) angeordnet ist.

**13.** Kommunikationssystem (49) nach einem der Ansprüche 9 bis 12,
**dadurch gekennzeichnet, dass**
der Sender (51) mit einem induktiven Übertrager (L1) zu einer galvanisch entkoppelten Steuerungseinspeisung (U) ausgestattet ist, wobei vorzugsweise der Übertrager (L1) aus wenigstens drei Wicklungen (L2, L3, L4) zusammengesetzt ist, von denen die Wicklung (L4) in der ersten Energieübertragungsleitung, wie zum Beispiel dem ersten Phasenleiter (L, L', L''), und die Wicklung (L3) in der zweiten Energieübertragungsleitung, wie zum Beispiel dem Nullleiter (N, N', N''), mit einem Ferritkern (M) versehen, gleichsinnig sind und die Wicklung in der Steuerungseinspeisung (U, L2) hierzu gegensinnig ausgestaltet ist, und der Empfänger (53) über eine kapazitiv (CX1, CX2, CY1) entkoppelte Messimpedanz (R1) endstromseitig in dem Versorgungsnetz eingebunden ist, wobei vorzugsweise der Empfänger (53) die Versorgungsenergie an ein Beleuchtungsmittel (19) durchleitet.

**14.** Kommunikationssystem (49) nach einem der vorhergehenden Ansprüche 9 bis 13, **dadurch gekennzeichnet, dass**
die Verbraucher (17) bei einer Störung der Kommunikation zwischen Sender (51) und Empfänger (53) einen sicheren Zustand einnehmen, Sicherheitslichtleuchten (29) insbesondere eingeschaltet werden.

**15.** Kommunikationssystem (49) nach einem der vorhergehenden Ansprüche 9 bis 14,
**dadurch gekennzeichnet, dass**
endstromkreisseitig, insbesondere in einem Beleuchtungskörper (21) angeordnet, ein terminierender Widerstand (6) die Energieübertragungsleitungen (L, L', L'', N, N', N'') abschließt, insbesondere in dem Maße, dass eine Wellenreflexion auf den Leitungen vor dem Endstromkreis unter einen Störabstand gedrückt wird.

**16.** Überwachungs- und Versorgungseinheit (4) für eine Sicherheitsbeleuchtungsanlage (2), zum Anschluss und Überwachung mehrerer Leuchten (21) der Sicherheitsbeleuchtungsanlage (2) und deren Energiezuleitung (L, L', L'', N, N', N''), **dadurch gekennzeichnet, dass**
die Überwachungs- und Versorgungseinheit einen Übertrager (L1) mit mindestens zwei isolierten, sich kompensierenden Wicklungen enthält, insbesondere nach einem der Ansprüche 13 bis 15, wobei vorzugsweise ein 50Hz-Signal des Übertragers (L1) zur Auswertung von Fehlströmen der Leuchten (21) und/oder der Energiezuleitungen (L, L', L'', N, N', N'') genutzt wird.

**17.** Überwachungs- und Versorgungseinheit (4) nach Anspruch 16, die mehrere Leuchten (21) der Sicherheitsbeleuchtungsanlage (2) und deren Energiezuleitungen (L, L', L'', N, N', N'') steuert und überwacht,
**dadurch gekennzeichnet, dass**
die Steuerung und Überwachung über die Energiezuleitungen (L, L', L'', N, N', N'') erfolgt, wobei die Überwachungs- und Versorgungseinheit (4) einen Strom in den Energiezuleitungen (L, L', L'', N, N', N'') in einem Zeitbereich fortwährend oder mehrfach misst
und einen Gradienten des Stroms detektiert.

**18.** Überwachungs- und Versorgungseinheit (4) nach Anspruch 16 oder 17, die in einem Kommunikationssystem (49) nach einem der Ansprüche 9 bis 15 angeordnet ist, wobei das Kommunikationssystem (49) insbesondere nach einem der Ansprüche 1 bis 8 arbeitet.

**19.** Beleuchtungskörper (21, 23, 25, 27) für eine Sicherheitsbeleuchtungsanlage (2) mit zentralisierter Notstromanlage (4) mit einem beleuchtungskörperübergreifenden Kommunikationssystem (49) über deren Energieversorgungsleitungen (L, L', L'', N, N', N'')
insbesondere nach einem der vorhergehenden Ansprüche,
die einen Mikrocontroller hat,
der über einen Mikroprozessor mit einem Rechenwerk und
der über einen integrierten Datenspeicher

sowie einen Analog-Digital-Konverter verfügt und

der ein Kommunikationssignal mittels des Analog-Digital-Konverters erfasst,

wobei der Mikrocontroller über eine Adresse verfügt anhand derer der Mikroskontroller durch das Kommunikationssystem (49) adressierbar ist, und

einen Sender (51) hat,

um Informationen über die Energieversorgungsleitungen (L, L', L'', N, N', N'') zu senden, **dadurch gekennzeichnet, dass**

der Mikrocontroller mittels des Analog-Digital-Konverters das Kommunikationssignal mehrfach erfasst, insbesondere die Erfassungsrate des Analog-Digital-Konverters höher als die Symbolrate des Kommunikationssignals ist,

der Mikrocontroller vorzugsweise über eine Multiplikationseinheit verfügt,

das Rechenwerk und der Datenspeicher eine Wortbreite von mehr als 15 Bit, insbesondere 32 Bit, umfasst,

und der Mikrocontroller damit eine Dekodierung des mehrfach erfassten Kommunikationssignals durchführt

und anhand des mehrfach erfassten Kommunikationssignals eine Lichtintensität des Beleuchtungskörpers (21, 23, 25, 27) steuert

und mittels des Senders (51) Überwachungsergebnisse über die Energieversorgungsleitungen (L, L', L'', N, N', N'') versendet.

**Claims**

1. Method for communication within a final power supply network (1) in the context of a safety lighting system (2), using luminous elements (21), such as lamps (23), fluorescent tubes (27) and light-emitting consumers (25), that form the final electrical circuit (15), and are supplied with energy from the final power supply network (1), are to be controlled, falling back on a transmitter (51), whereas the transmitter (51) and an final electrical circuit (15) equipped with at least one receiver (53) are to be brought via at least two lines (L, L', L'', N, N', N'') for energy supply and via at least one protective earth conductor (PE, PE', PE'') into communicative connection (101),
   **characterised in that**
   the safety lighting system (2) is equipped with an emergency power system (4) and an energy distributor (55) of a building installation (11) is present, with which the transmitter (51) can be arranged in communicative connection (101), whereas the communication takes place within the final power supply network (1), which comprises reflection damping in a luminous elements (21), on the basis of a power line communication (103) in an end-current approved frequency band ($f_B$) between 95 kHz and 148.5 kHz, and data (Data_In, Data_Out, 77) can be transmitted between the transmitter (51) and the at least one final electrical circuit (15) in such a manner, that the receiver (53) starts its necessary command sequence (81) due to a potential shift (107) of both energy supply lines (L, L', L'', N, N', N''), whilst the protective earth conductor (PE, PE', PE'') is kept isochronally at a constant potential (105).

2. Method for communication according to Claim 1, **characterised in that** in a first state (Z1), the regular operating state with alternating current voltage supply (5), one of the at least two energy supply lines (L, L', L'', N, N', N'') is a phase line (L, L', L'') of a phase conductor, a further one of the at least two energy supply lines is a neutral conductor (N, N', N'') and the protective earth conductor (PE, PE', PE'') is an earthed conductor, wherein the potential shift (107) carried out in particular is to be carried out both on at least one phase wire (L, L', L'') and to the same extent on the neutral conductor (N, N', N'').

3. Method for communication according to Claim 3,
   **characterised in that**
   the potential shift (107) of the phase conductor (L, L', L'') and also of the neutral conductor (N, N', N'') takes place isochronally and with the same sign, particularly by means of inductive voltage impression (U), in order to preferably detect a transmission start ($Ü_S$) of switching information ($S_I$) on the basis of a sporadic voltage fluctuation (115) as against the protective earth conductor (PE, PE', PE'').

4. Method for communication according to one of the preceding claims, **characterised in that** an information transmission (67) takes place by means of a periodic potential shift (107) of the phase conductor (L, L', L'') and the neutral conductor (N, N', N''), wherein the information transmission (67) takes place in packets (69) in particular, and here each individual packet is informationally terminated by means of a, preferably self-correcting, checksum, which can be formed for example by means of multiple redundant information repetition (75).

5. Method for communication according to one of the preceding claims, **characterised in that** the method is based on a power-line communication (103) in an final current approved frequency band ($f_B$) between 95 kHz and 125 kHz, wherein particularly the periodic, varying potential shift (107) has a damping (113) larger than 50 dB for a lowest permissible voltage amplitude (111) of the final power supply network (1) and the information transmission (67) is encoded in an amplitude, frequency or phase modulation (AM).

6. Method for communication according to one of the preceding claims, **characterised in that** the information transmission (67) causes the selective switching (S) of safety lighting means (31) such as stand-by lighting lamps (35) from a group of luminous elements (21), wherein luminous elements (21) of different categories, such as permanent lighting lamps (33), stand-by lighting lamps (35) and switched stand-by lighting lamps, alarm lamps (37) and warning lamps (39) are preferably electrically connected in parallel between phase conductor (L, L', L"), neutral conductor (N, N', N") and protective earth conductor (PE, PE', PE").

7. Method for communication according to one of the preceding claims, **characterised in that** a positive potential shift (107) on the phase conductor (L, L', L") and neutral conductor (N, N', N") compared to the protective earth conductor (PE, PE', PE") corresponds to a set bit (79) of a digital data transmission (77) of the information transmission (67) and a negative potential shift (107) on the phase conductor (L, L', L") and the neutral conductor (N, N', N") corresponds to a recessive bit of the digital data transmission (77).

8. Method for communication according to one of the preceding claims, **characterised in that** reflected waves on the two lines (L, L', L", N, N', N") for energy supply below a signal-to-noise ratio compared to the voltage change (115) are reduced by an end reflection damping by means of resistance which is preferably arranged in a luminous elements (21).

9. Communication system (49) over supply lines (L, L', L", N, N', N") of a safety lighting system (2) with emergency power system (4), using 2 luminous elements (21) which can be controlled as final circuit consumers (17), which are used as safety lighting lamps (29), in particular in accordance with a method according to Claims 1 to 8, comprising at least one transmitter (51), which is arranged between energy feed-in of the building (9) and a receiver (53), and comprising at least one receiver (53) which is connected upstream of the end circuit (15) for controlling at least one safety lighting lamp (29), and comprising at least three electrical lines (L, L', L", N, N', N", PE, PE', PE"), of which at least two conductors (L, L', L", N, N', N") are meant for energy transmission and of which at least one conductor is used as protective earth conductor (PE, PE', PE"),
**characterised in that**
the communication between transmitter (51) and receiver (53) takes place by means of a potential shift (107) of two of the three lines (L, L', L", N, N', N", PE, PE', PE"), particularly the two energy transmission conductors (L, L', L", N, N', N"), whilst the protective earth conductor (PE, PE', PE") remains at a constant potential (105).

10. Communication system (49) according to Claim 9,
**characterised in that**
of the energy transmission lines (L, L', L", N, N', N"), one line in a first operating state (Z1) carrying alternating-current voltage, is a phase conductor (L, L', L") and of the energy transmission lines (L, L', L", N, N', N"), one line is a neutral conductor (N, N', N") and the at least one protective earth conductor (PE, PE', PE") is an earthing conductor.

11. Communication system (49) according to one of Claims 9 to 10, **characterised in that** the potential shift (107) is carried out synchronously and at the same voltage.

12. Communication system (49) according to one of the Claims 9 to 11, **characterised in that** a constant energy source (61) such as a battery system (63) or a fuel cell system (65) is connected to the distributor (55), which safeguards the supply voltage (3) to the final electrical circuits (15) and in particular the transmitter (51) is arranged in the region of an energy distributor (55) of the building (9).

13. Communication system (49) according to one of the Claims 9 to 12, **characterised in that** the transmitter (51) is equipped with an inductive transformer (L1) for a galvanically decoupled control feed (U), wherein the transformer (L1) is preferably composed of at least three windings (L2, L3, L4), of which the winding (L4) in the first energy transmission line, such as for example the first phase conductor (L, L', L"), and the winding (L3) in the second energy transmission line, such as for example the neutral conductor (N, N', N"), provided with a ferrite core (M), are in the same direction and the winding in the control feed (U, L2) is configured in the opposite direction thereto, and the receiver (53) is incorporated in the supply network at the end current side via a capacitively (CX1, CX2, CY1) decoupled measuring impedance (R1), wherein the receiver (53) preferably conducts the supplied energy to a lighting means (19).

14. Communication system (49) according to one of the preceding Claims 9 to 13, **characterised in that**, in the event of a disruption of the communication between transmitter (51) and receiver (53), the consumers (17) assume a safe state, safety lighting lamps (29) in particular are switched on.

15. Communication system (49) according to one of the preceding Claims 9 to 14,
**characterised in that**
at the final electrical circuit side, arranged in a luminous elements (21) in particular, a terminating resistor (6) terminates the energy transmission lines (L, L', L", N, N', N"), particularly to the extent that a wave reflection is impressed on the lines upstream of the end electrical circuit below a signal-to-noise ratio.

16. Monitoring and supply unit (4) for a safety lighting system (2), for the connection and monitoring of a plurality of luminairy (21) of the safety lighting system (2) and the energy supply line (L, L', L", N, N', N") thereof, **characterised in that**
the monitoring and supply unit has a transformer (L1) with at least two insulated self-compensating windings, in particular according to one of Claims 13 to 15, wherein a 50Hz signal of the transformer (L1) is preferably used for analysing fault currents of the lamps (21) and/or the energy supply lines (L, L', L", N, N', N").

17. Monitoring and supply unit (4) according to Claim 16, which controls and monitors a plurality of luminairy (21) of the safety lighting system (2) and the energy supply lines (L, L', L", N, N', N") thereof,
**characterised in that**
the control and monitoring takes place via the energy supply lines (L, L', L", N, N', N"), wherein the monitoring and supply unit (4) measures a current in the energy supply lines (L, L', L", N, N', N") continually or multiple times in a time period and detects a gradient of the current.

18. Monitoring and supply unit (4) according to Claim 16 or 17, which is arranged in a communication system (49) according to one of the Claims 9 to 15, wherein the communication system (49) operates in particular according to one of the Claims 1 to 8.

19. Luminous element (21, 23, 25, 27) for a safety lighting system (2) with centralised emergency power system (4) with a communication system (49) affecting the luminous elements, via the energy supply lines (L, L', L", N, N', N") thereof, in particular according to one of the preceding claims, which has a microcontroller, which has a microprocessor with an arithmetic and logic unit and which has an integrated data memory and also an analogue/digital converter and which detects a communication signal by means of the analogue/digital converter, whereas the microcontroller has an address, on the basis of which the microcontroller can be addressed by means of the communication system (49), and has a transmitter (51), in order to transmit information via the energy supply lines (L, L', L", N, N', N"),
**characterised in that**
the microcontroller detects the communication signal multiple times by means of the analogue/digital converter, in particular the detection rate of the analogue/digital converter is higher than the symbol rate of the communication signal, the microcontroller preferably has a multiplication unit, the arithmetic and logic unit and the data memory comprises a resolution of more than 15 bits, particularly 32 bits, and the microcontroller therefore carries out a decoding of the communication signal which is detected multiple times and controls a light intensity of the luminous element (21, 23, 25, 27) on the basis of the communication signal which has been detected multiple times and monitoring results are sent via the energy supply lines (L, L', L", N, N', N") by means of the transmitter (51).

**Revendications**

1. Procédé pour la communication à l'intérieur d'un réseau d'alimentation du côté terminal (1) dans le cadre d'une installation d'éclairage de sécurité (2),
avec lequel des appareils d'éclairage (21) formant le circuit de courant terminal (15), comme des lampes (23), des tubes fluorescents (27) et des consommateurs émettant de la lumière (25), qui sont alimentés en énergie par le réseau d'alimentation (1), doivent être commandés,
en ayant recours à un émetteur (51),
l'émetteur (51) et un circuit de courant terminal (15) équipé d'au moins un récepteur (53) peuvent être amenés en relation de communication (101) par l'intermédiaire d'au moins deux lignes (L, L', L", N, N', N") pour l'alimentation en énergie et par au moins un conducteur de protection (PE, PE', PE"),

**caractérisé en ce**

**que** l'installation d'éclairage de sécurité (2) est équipée d'une installation de courant de secours (4) et qu'il existe un distributeur d'énergie (55) d'une installation de bâtiment (11) avec lequel l'émetteur (51) peut être placé en relation de communication (101),

la communication à l'intérieur du réseau d'alimentation du côté terminal (1), qui comprend un amortissement de la réflexion dans un appareil d'éclairage (21), se faisant sur la base d'une communication powerline (103) dans une bande de fréquence libérée du côté du courant terminal ($f_B$) entre 95 kHz et 148,5 kHz et des données (Data_In, Data_Out, 77) pouvant être transmises entre l'émetteur (51) et le circuit de courant terminal (15) qui existe au moins de telle manière que le récepteur (53) démarre sa séquence d'instructions à exécuter (81) en raison d'un déplacement de potentiel (107) des deux lignes d'alimentation en énergie (L, L', L", N, N', N") pendant que le conducteur de protection (PE, PE', PE") est maintenu isochrone sur un potentiel constant (105).

2. Procédé pour la communication selon la revendication 1,

   **caractérisé en ce que**,

   dans un premier état (Z1), l'état de fonctionnement régulier avec alimentation en tension alternative (5), l'une des au moins deux lignes d'alimentation en énergie (L, L', L", N, N', N") est une conduite de phase (L, L', L") d'un fil de phase, une autre des au moins deux lignes d'alimentation en énergie (L, L', L", N, N', N") est un neutre (N, N', N") et le conducteur de protection (PE, PE', PE") est un conducteur mis à la terre,

   cependant que

   le déplacement de potentiel effectué (107) est à effectuer aussi bien sur au moins un fil de phase (L, L', L") que dans la même mesure sur le neutre (N, N', N").

3. Procédé pour la communication selon la revendication 3,

   **caractérisé en ce**

   **que** le déplacement de potentiel (107) du fil de phase (L, L', L") ainsi que du neutre (N, N', N") se fait de manière isochrone et de même signe, en particulier par marquage de tension inductif (U), pour détecter un démarrage de transmission (Ü$_S$) d'informations de mise en circuit (S1) de préférence à l'aide d'une variation temporaire de tension (115) par rapport au conducteur de terre (PE, PE', PE").

4. Procédé pour la communication selon l'une des revendications précédentes, **caractérisé en ce que**

   une transmission d'informations (67) se fait par un déplacement de potentiel périodique (107) du fil de phase (L, L', L") et du neutre (N, N', N"), cependant qu'en particulier la transmission d'informations (67) se fait par paquets (69) et chaque paquet individuel est terminé sur le plan informationnel par un total de contrôle, de préférence autocorrecteur, qui peut être formé, par exemple, par une répétition d'informations multiple redondante.

5. Procédé pour la communication selon l'une des revendications précédentes, **caractérisé en ce que**

   le procédé se base sur une communication powerline (103) dans une bande de fréquence libérée du côté du courant terminal ($f_B$) entre 95 kHz et 125 kHz, cependant que de préférence le déplacement périodique de potentiel qui varie (107) présente un plus grand amortissement (113) que 50 dB vers une amplitude de tension la plus faible admissible (111) du réseau d'alimentation (1) et la transmission d'informations (67) est codée dans une modulation d'amplitude, de fréquence et de phase (AM).

6. Procédé pour la communication selon l'une des revendications précédentes, **caractérisé en ce que**

   la transmission d'informations (67) provoque la mise en circuit sélective (S) de moyens d'éclairage de sécurité (31) comme des luminaires à lumière de réserve (35) d'un groupe d'appareils d'éclairage (21), cependant que des appareils d'éclairage (21) de différentes catégories comme des luminaires à lumière permanente (33), des luminaires à lumière de réserve (35) et des luminaires à lumière de réserve commutés, des luminaires d'alarme (37) et des lumières d'avertissement (39) sont câblés électriquement en parallèle les uns avec les autres de préférence entre le fil de phase (L, L', L"), le neutre (N, N', N") et le conducteur de terre (PE, PE', PE").

7. Procédé pour la communication selon l'une des revendications précédentes, **caractérisé en ce que**

   un déplacement de potentiel positif (107) par rapport au conducteur de terre (PE, PE', PE") sur le fil de phase (L, L', L") et le neutre (N, N', N") correspond à un bit posé (79) d'une transmission numérique de données (77) de la transmission d'informations (67) et qu'un déplacement de potentiel négatif (107) sur le fil de phase (L, L', L") et le neutre (N, N', N") correspond à un bit récessif de la transmission numérique de données (77).

8. Procédé pour la communication selon l'une des revendications précédentes, **caractérisé en ce que**,

par un amortissement de la réflexion côté terminal au moyen d'une résistance qui est placée de préférence dans un appareil d'éclairage (21), des ondes réfléchies sont réduites sur les deux lignes (L, L', L", N, N', N") pour l'alimentation en énergie en dessous d'un rapport signal/bruit par comparaison avec la variation de tension (115).

9. Système de communication (49) par des lignes d'alimentation (L, L', L", N, N', N") d'une installation d'éclairage de sécurité (2) avec une installation de courant de secours (4) avec laquelle 2 appareils d'éclairage (21) peuvent être commandés en tant que consommateurs du côté du circuit de courant terminal (17), qui servent de luminaires de lumière de sécurité (29), en particulier selon un procédé selon les revendications 1 à 8,
comprenant au moins un émetteur (51) qui est placé entre l'alimentation en énergie du bâtiment (9) et un récepteur (53) et
comprenant au moins un récepteur (53) qui est mis en circuit pour la commande d'au moins d'un luminaire de lumière de sécurité (29) avant le circuit de courant terminal (15) et
comprenant au moins trois lignes électriques (L, L', L", N, N', N", PE, PE', PE") dont au moins deux conducteurs (L, L', L", N, N', N") sont destinés à la transmission d'énergie et
dont au moins un conducteur sert de conducteur de protection (PE, PE', PE"), **caractérisé en ce que** la communication entre l'émetteur (51) et le récepteur (53) se fait par un déplacement de potentiel (107) de deux des trois lignes (L, L', L", N, N', N", PE, PE', PE"), en particulier des deux lignes de transmission d'énergie (L, L', L", N, N', N") tandis que le conducteur de protection (PE, PE', PE") reste sur un potentiel constant (105).

10. Système de communication (49) selon la revendication 9,
**caractérisé en ce que**
parmi les lignes de transmission d'énergie (L, L', L", N, N', N") une ligne dans un premier état de fonctionnement conducteur de tension alternative (Z1) est un fil de phase (L, L', L") et que parmi les lignes de transmission d'énergie (L, L', L", N, N', N") une ligne est un neutre (N, N', N") et le conducteur de protection (PE, PE', PE") qui existe au moins est un conducteur de terre.

11. Système de communication (49) selon l'une des revendications 9 à 10, **caractérisé en ce que** le déplacement de potentiel (107) est effectué de manière synchrone et avec la même tension.

12. Système de communication (49) selon l'une des revendications 9 à 11, **caractérisé en ce que** une source d'énergie constante (61), comme une installation de piles (63) ou une installation de pile à combustible (65), est mise en circuit avec le distributeur (55), source qui assure la tension d'alimentation (3) aux circuits terminaux (15) et en particulier l'émetteur (51) est placé dans la zone d'un distributeur d'énergie (55) du bâtiment (9).

13. Système de communication (49) selon l'une des revendications 9 à 12, **caractérisé en ce que** l'émetteur (51) est équipé d'un transmetteur inductif (L1) à une alimentation de commande (U) à découplage galvanique, cependant que de préférence le transmetteur (L1) est composé d'au moins trois enroulements (L2, L3, L4) dont l'enroulement (L4) dans la première ligne de transmission d'énergie, comme par exemple le premier fil de phase (L, L', L") et l'enroulement (L3) dans la seconde ligne de transmission d'énergie comme, par exemple, le neutre (N, N', N"), pourvu d'un noyau en ferrite (M), sont de même sens et l'enroulement dans l'alimentation de commande (U, L2) est configuré de sens contraire par rapport à celui-ci et le récepteur (53) est intégré dans le réseau d'alimentation du côté du courant terminal par une impédance de mesure (R1) à découplage capacitif (CX1, CX2, CY1), cependant que de préférence le récepteur (53) fait passer l'énergie d'alimentation à un moyen d'éclairage (19).

14. Système de communication (49) selon l'une des revendications précédentes 9 à 13, **caractérisé en ce que** les consommateurs (17), lors d'une perturbation de la communication entre l'émetteur (51) et le récepteur (53), prennent un état sûr, en particulier que des luminaires de lumière de sécurité (29) sont mis en circuit.

15. Système de communication (49) selon l'une des revendications 9 à 14, **caractérisé en ce que** une résistance terminale (6), placée du côté du circuit de courant terminal, en particulier dans un appareil d'éclairage (21), termine les lignes de transmission d'énergie (L, L', L", N, N', N"), en particulier de manière qu'une réflexion d'ondes sur les lignes est refoulée avant le circuit de courant terminal en dessous d'un rapport signal/bruit.

16. Unité de surveillance et d'alimentation (4) pour une installation d'éclairage de sécurité (2) pour le branchement et la surveillance de plusieurs luminaires (21) de l'installation d'éclairage de sécurité (2) et de sa ligne d'alimentation en énergie (L, L', L", N, N', N"),
**caractérisée en ce**

**que** l'unité de surveillance et d'alimentation contient un translateur (L1) avec au moins deux enroulements isolés qui se compensent, en particulier selon l'une des revendications 13 à 15, un signal de 50 Hz du translateur (L1) étant de préférence utilisé pour l'exploitation de courants de fuite des luminaires (21) et/ou des lignes d'alimentation en énergie (L, L', L", N, N', N").

17. Unité de surveillance et d'alimentation (4) selon la revendication 16 qui commande et surveille plusieurs luminaires (21) de l'installation d'éclairage de sécurité (2) et leurs lignes d'alimentation en énergie (L, L', L", N, N', N"), **caractérisée en ce**

**que** la commande et la surveillance se fait par les lignes d'alimentation en énergie (L, L', L", N, N', N"), l'unité de surveillance et d'alimentation (4) mesurant un courant dans les lignes d'alimentation en énergie (L, L', L", N, N', N") de manière continuelle dans une plage de temps ou plusieurs fois et détectant un gradient de courant.

18. Unité de surveillance et d'alimentation (4) selon la revendication 16 ou 17 qui est placée dans un système de communication (49) selon l'une des revendications 9 à 15, le système de communication (49) travaillant en particulier selon l'une des revendications 1 à 8.

19. Appareil d'éclairage (21, 23, 25, 27) pour une installation d'éclairage de sécurité (2) avec une installation de courant de secours centralisée (4) avec un système de communication qui s'étend aux appareils d'éclairage par leurs lignes d'alimentation en énergie (L, L', L", N, N', N"), en particulier selon l'une des revendications précédentes, qui a un microcontrôleur, qui dispose d'un microprocesseur avec une unité de calcul et d'une mémoire de données intégrée ainsi que d'un convertisseur analogique/numérique et qui saisit un signal de communication à l'aide du convertisseur analogique/numérique, le microcontrôleur disposant d'une adresse à l'aide de laquelle le microcontrôleur peut être adressé par le système de communication (49) et qui a un émetteur (51) pour envoyer des informations par les lignes d'alimentation en énergie (L, L', L", N, N', N"),

**caractérisé en ce**

**que** le microcontrôleur saisit le signal de communication plusieurs fois à l'aide du convertisseur analogique/numérique, en particulier que le taux de saisie du convertisseur analogique/numérique est plus élevé que le taux de symbole du signal de communication, que le microcontrôleur dispose de préférence d'une unité de multiplication, que l'unité de calcul et la mémoire de données comprend une largeur de mot de plus de 15 bits, en particulier de 32 bits et que le microcontrôleur exécute ainsi un décodage du signal de communication saisi plusieurs fois et commande, à l'aide du signal de communication saisi plusieurs fois, une intensité de lumière de l'appareil d'éclairage (21, 23, 25, 27) et envoie, à l'aide de l'émetteur (51), des résultats de surveillance par les lignes d'alimentation en énergie (L, L', L", N, N', N").

Fig. 1

Fig. 2

Fig. 3

101

Fig. 4

EP 2 280 493 B1

# Fig. 5

Fig. 6

Fig. 7

EP 2 280 493 B1

37

Fig. 8

Fig. 9

L, L', L'', L'''

N, N', N'', N'''

PE, PE', U, GND

**Fig. 10**

**Fig. 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3828271 A1
- US 2006202640 A1
- US 2006091818 A1
- US 2003189495 A1
- GB 2407013 A
- US 5257006 A
- DE 738528 C
- GB 2091976 A
- DE 2333868 A
- DE 2835549 A
- WO 94024777 A2
- DE 19601884 A1
- US 5194858 A

- DE 2904875 B2
- DE 2933596 C2
- DE 2947008 A1
- DE 10316008 A1
- EP 0939476 B2
- EP 1066690 B1
- DE 19834304 A1
- DE 19725710 A1
- DE 102007018884 A1
- EP 2194762 A1
- EP 0537651 A2
- DE 3828272 A1

**In der Beschreibung aufgeführte Nicht-Patentliteratur**

- **MEGGEDE.** Die Fernsteuerung ohne Steuerleitungen in Starkstromnetzen, insbesondere die Überlagerung durch mittelfrequente Ströme. *Die Naturwissenschaften,* 16. Oktober 1936, 662 ff
- AEG-Hilfsbuch. 394 ff

- Halbleiter-Schaltungstechnik. Verlag: Springer, 15. Oktober 2009
- Digital Communications. Verlag: McGraw-Hill Science/Engineering/Math, 06. November 2007